(19) Europäisches Patentamt
European Patent Office
Office européen des brevets

(11) **EP 1 892 126 B1**

(12) **EUROPEAN PATENT SPECIFICATION**

(45) Date of publication and mention
of the grant of the patent:
**25.11.2009 Bulletin 2009/48**

(51) Int Cl.:
*B60C 11/00* (2006.01)     *B60C 3/06* (2006.01)
*B60C 5/00* (2006.01)     *B60C 9/22* (2006.01)
*B60C 11/01* (2006.01)     *B60C 11/04* (2006.01)
*B60C 11/13* (2006.01)     *B60C 15/06* (2006.01)

(21) Application number: **06756838.6**

(22) Date of filing: **31.05.2006**

(86) International application number:
**PCT/JP2006/310918**

(87) International publication number:
**WO 2006/134776 (21.12.2006 Gazette 2006/51)**

(54) **PNEUMATIC TIRE**

LUFTREIFEN

PNEU

(84) Designated Contracting States:
**DE FR**

(30) Priority: **17.06.2005 JP 2005178464**

(43) Date of publication of application:
**27.02.2008 Bulletin 2008/09**

(73) Proprietor: **The Yokohama Rubber Co., Ltd.**
**Minato-ku**
**Tokyo 105-8685 (JP)**

(72) Inventors:
• **MATSUNAGA, Futoshi**
**The Yokohama Rubber Co., LTD.**
**Kanagawa 2548601 (JP)**
• **MORITA, Kenichi**
**The Yokohama Rubber Co., LTD.**
**Kangawa 2548601 (JP)**

(74) Representative: **HOFFMANN EITLE**
**Patent- und Rechtsanwälte**
**Arabellastrasse 4**
**81925 München (DE)**

(56) References cited:
JP-A- 01 060 404     JP-A- 04 071 908
JP-A- 04 230 404     JP-A- 06 183 214
JP-A- 06 297 913     JP-A- 06 344 721
JP-A- 07 156 604     JP-A- 09 071 107
JP-A- 09 226 312     JP-A- 10 181 309
JP-A- 11 059 127     JP-A- 61 226 304
JP-A- 61 229 602     JP-A- 63 134 313
JP-A- 2001 260 611     JP-A- 2004 050 869
JP-A- 2004 262 269

**Description**

TECHNICAL FIELD

The present invention relates to a pneumatic tire, and more particularly, to a pneumatic tire including a tread surface with a cross-sectional shape formed of a plurality of arcs.

BACKGROUND ART

In a conventional tire, an area to be used on a tread when a vehicle travels straight is different from that used when the vehicle travels around a curve. Hence, the degree of wear may vary from point to point across the tread depending on a traveling condition, and accordingly, uneven tread wear may occur, Some conventional tires have a tread in a shape appropriate to reduce uneven tread wear. For example, according to Japanese Patent Application Laid-Open No. H9-71107, to achieve a uniform contact pressure distribution and a uniform contact length distribution over the tread, the crown of the tread is formed from three arcs that have respective different curvature radiuses, and each of the arcs is formed to have an appropriate curvature radius, and an appropriate width in the tire width direction. Accordingly, the tread wears uniformly along the crown-width direction even when traveling under various conditions and the uneven tread wear can be reduced.

JP-A-6-297913 discloses a combination of features falling within the scope of the preamble of Claim 1.

As described, conventional pneumatic tires are designed to reduce uneven tread wear with an appropriate crown shape. Characteristics of a pneumatic tire in contact with the ground vary also depending on a load applied to the tread. For example, a change in a load applied to the tread changes the maximum cornering force of a vehicle when turning round to which the pneumatic tire is installed. The maximum cornering force affects the driving stability and the rollover resistance of the vehicle, which are incompatible, however, demands for improvements in the driving stability and the rollover characteristics have been increased because of a strong trend toward a higher center of gravity of a vehicle and a lower aspect ratio of a pneumatic tire.

SUMMARY OF THE INVENTION

According to a first aspect of the present invention, there is provided a pneumatic tire comprising: a sidewall portion arranged on each edge of a tire width direction; and a tread portion provided on an outer side of the sidewall portion in a tire radial direction, the tread portion including a cap tread, wherein a tread surface that is a surface of the cap tread in a meridian cross section of the pneumatic tire is formed with a plurality of arcs with different curvature radiuses, and **characterised in that**: under a condition when the pneumatic tire is mounted on a proper rim, and filled with an internal pressure of 5% of a normal internal pressure, the tread surface is formed from a center arc centered in the tire width direction, a shoulder-side arc positioned on a vehicle-outer-side at least from the center arc in the tire width direction, and a shoulder arc that forms a shoulder arranged at least a vehicle-outer-side end in the tire width direction of the tread surface, K1 satisfies $0.6 \leq K1 \leq 0.8$, K2 satisfies $0.9 \leq K2 \leq 2.0$, and K3 satisfies $0.40 \leq K3 \leq 0.48$, where K1 is defined by $K1 = L1/(TDW \times 0.5)$, K2 is defined by $K2 = TR1/OD$, K3 is defined by $K3 = (\beta \times TDW)/(100 \times SW)$, TR1 is a curvature radius of the center arc, L1 is an outline area, which is a width from an equatorial plane to an end of the center arc in the tire width direction, TDW is a tread development width, which is a width of the tread surface in the tire width direction, SW is a total width, which is a width in the tire width direction between outermost positions in the tire width direction of the sidewall portions opposed as arranged at both edges of the tire width direction, OD is a tire outside diameter, which is a diameter of the pneumatic tire at a position at which a diameter of the tread surface in a tire-radial direction is largest, and $\beta$ is an aspect ratio; and an angle $\alpha$ formed by a tangent in contact with the center arc and a tangent in contact with the shoulder arc satisfies $35° \leq \alpha \leq 60°$, the tangent in contact with the center-arc passing through an end in the tire width direction of the center-arc, and the tangent in contact with the shoulder-arc passing through an outer end in the tire width direction of the shoulder arc.

The present invention has been made in view of the above noted demands for improvements, and an advantage achievable with embodiments of the present invention is to provide a pneumatic tire with which the driving stability can be retained and also the rollover characteristics can be improved.

With embodiments of the present invention, the profile of the tread surface can be approximated to a flat shape, by calculating the relation K1 between the outline area L1 and the tread development width TDW according to the above equations, and setting K1 to satisfy $0.6 \leq K1 \leq 0.8$, and setting the ratio K2 between the curvature radius TR1 of the center arc and the outside diameter OD of the tire, to satisfy $0.9 \leq K2 \leq 2.0$. Accordingly, for example, the contact area at low load, for example, 40% of the maximum load, can be increased, so that the maximum cornering force at low load can be improved. Consequently, the driving stability at low load can be assured. In addition, by calculating the relation K3 between the aspect ratio $\beta$, the tread development width TDW, and the total width SW, in accordance with the above equations, to satisfy 0.40=<K3=<0.48, the tread development width can be narrowed, so that the contact area at high load, for example, at the maximum load, i.e., at 100% of the maximum load, can be decreased, and the maximum cornering force at high load can be reduced. Accordingly, the rollover resistance at high load can be improved. As a result, the rollover characteristics can be improved while retaining the driving stability.

Furthermore, with embodiments of the pneumatic tire according to the present invention, an angle formed by a tangent in contact with the center arc and a tangent in contact with the shoulder arc satisfies $35° \leq \alpha \leq 60°$, the tangent in contact with the center-arc passing through an end in the tire width direction of the center-arc, and the tangent in contact with the shoulder-arc passing through an outer end in the tire width direction of the shoulder arc.

By designing the angle $\alpha$ to satisfy $35° \leq \alpha \leq 60°$, an angle can be changed largely around the shoulder from the tread surface direction to the sidewall direction, in other words, the shoulder can drop at a steep angle. Accordingly, an expansion of the contact width at high load and a large slip angle can be suppressed, so that the maximum cornering force at high load can be reduced more securely, and the rollover resistance at high load can be improved more substantially. As a result, the rollover characteristics can be improved more reliably.

In preferred embodiments of the pneumatic tire according to the present invention, when SHR is a curvature radius of the shoulder arc, K4 satisfies $0.025 \leq K4 \leq 0.035$, K4 being obtained from a following equation (4), which obtains a ratio of the curvature radius TR1 of the center arc to the curvature radius SHR of the shoulder arc,

$$K4 = SHR/TR1 \quad (4)$$

By designing the ratio K4 of the curvature radius TR1 of the center arc to the curvature radius SHR of the shoulder arc to satisfy $0.025 \leq K4 \leq 0.035$, the curvature radius of the shoulder can be shortened. Accordingly, an expansion of the contact width at high load and a large slip angle can be suppressed, so that the maximum cornering force at high load can be reduced more securely, and the rollover resistance at high load can be improved more substantially. As a result, the rollover characteristics can be improved more reliably.

In further preferred embodiments of the pneumatic tire according to the present invention, at least a part of the cap tread uses a compound of which a 300%-tensile modulus is 5 MPa to 10 MPa.

In this case, because the rollover characteristics are largely affected by the compound of the cap tread that the tread includes, improvement in the rollover resistance is designed by using the compound of which 300% tensile modulus is in the range from 5 MPa to 10 MPa for at least a part of the cap tread. In other words, by using such compound for at least a part of the cap tread, the friction force in the tire width direction at high load and a large slip angle can be reduced, so that the rollover resistance can be improved. As a result, the rollover characteristics can be improved more reliably.

In even further preferred embodiments of the pneumatic tire according to the present invention, at least a part of the cap tread uses anisotropic rubber in which a modulus in the tire width direction is smaller than a modulus in tire circumferential direction.

Improvement in the rollover resistance is designed by using anisotropic rubber in which a modulus in the tire width direction is smaller than a modulus in tire circumferential direction for at least a part of the cap tread. In other words, by using such anisotropic rubber for at least a part of the cap tread, the friction force in the tire width direction at high load and a large slip angle can be reduced, so that the rollover resistance can be improved. As a result, the rollover characteristics can be improved more reliably.

In yet even further preferred embodiments of the pneumatic tire according to the present invention, a plurality of circumferential grooves that are formed in a tire circumferential direction are further provided on the tread surface, and a shoulder-side circumferential groove from among the circumferential grooves that is a circumferential groove arranged most closely to the shoulder between the equatorial plane and the shoulder is provided at a position at which T1 satisfies $0.55 \leq T1 \leq 0.65$, when T1 is obtained from a following equation (5), which is a relation between a distance H1 and the tread development width TDW, the distance H1 being from a groove-width center of the shoulder-side circumferential groove to the equatorial plane in the tire width direction

$$T1 = H1/(TDW \times 0.5)$$

The shoulder-side circumferential groove is provided by calculating the relation T1 between the distance H1 from the groove-width center of the shoulder-side circumferential groove to the equatorial plane and the tread development width TDW in accordance with Equation (5) to satisfy $0.55 \leq T1 \leq 0.65$, so that the rollover resistance can be improved while retaining the driving stability more reliably. In other words, when the distance H1 from the equatorial plane to the groove-width center of the shoulder-side circumferential groove is smaller than 55% of a half of the tread development width TDW, because the shoulder-side circumferential groove is positioned too inside in the tire width direction, there is a possibility that the rigidity of the tread in the vicinity of the center in the tire width direction is too low. Consequently, there is a possibility that the driving stability is declined.

In another case, when the distance H1 from the equatorial plane to the groove-width center of the shoulder-side circumferential groove is larger than 65% of a half of the tread development width TDW, because the shoulder-side circumferential groove is positioned too outside in the tire width direction, there is a possibility that the rigidity of the tread in the vicinity of the center in the tire width direction is too high. Consequently, there is a possibility that the maximum cornering force is increased, and the degree of improvement in the rollover resistance is diminished. For this reason, by designing the shoulder-side circumferential groove to have the relation between the distance H1 from the groove-width center of the shoulder-side circumferential groove to the equatorial plane and the tread development width TDW that satisfies $0.55 \leq T1 \leq 0.65$, the rigidity of the tread in the vicinity of the center in the tire width direction can become appropriate. As a result, the rollover characteristics can be improved while retaining the driving stability more reliably.

In more preferred embodiments of the pneumatic tire according to the present invention, an equatorial-plane-side circumferential groove shoulder-side circumferential groove from among the circumferential grooves that is a circumferential groove arranged most closely to the equatorial plane between the equatorial plane and the shoulder is provided at a position at which T2 satisfies 0.15 T2 0.20, when T2 is obtained from a following equation (6), which is a relation between a distance H2 and the tread development width TDW, the distance H2 being from a groove-width center of the equatorial-plane-side circumferential groove to the equatorial plane in the tire width direction.

$$T2 = H2 / (TDW \times 0.5) \quad (6)$$

The equatorial-plane-side circumferential groove is provided by calculating the relation T2 between the distance H2 from the groove-width center of the equatorial-plane-side circumferential groove to the equatorial plane and the tread development width TDW in accordance with Equation (6) to satisfy $0.15 \leq T2 \leq 0.20$, so that the driving stability can be assured more securely. In other words, when the distance H2 from the equatorial plane to the groove-width center of the equatorial-plane-side circumferential groove is smaller than 15% of a half of the tread development width TDW, because the equatorial-plane-side circumferential groove is positioned too inside in the tire width direction, or too close to the equatorial plane, there is a possibility that the rigidity of the tread in the vicinity of the center in the tire width direction is too low. Consequently, there is a possibility that a response of the pneumatic tire to cornering is declined.

In another case, when the distance H2 from the equatorial plane to the groove-width center of the equatorial-plane-side circumferential groove is larger than 20% of a half of the tread development width TDW, because the equatorial-plane-side circumferential groove is positioned too outside in the tire width direction, there is a possibility that the rigidity of the tread in the vicinity of the center in the tire width direction is too high. Consequently, there is a possibility that a response of the pneumatic tire to cornering is too sensitive. For this reason, by designing the equatorial-plane-side circumferential groove to have the relation between the distance H2 from the groove-width center of the equatorial-plane-side circumferential groove to the equatorial plane and the tread development width TDW that satisfies $0.15 \leq T2 \leq 0.20$, the rigidity of the tread in the vicinity of the center in the tire width direction can become appropriate. As a result, a response of the pneumatic tire to cornering can be appropriate, so that the driving stability can be assured more securely.

In even more preferred embodiments of the pneumatic tire according to the present invention, the tread portion is formed from tread rubber that includes at least the cap tread, and a base rubber ply that is arranged tire-radially inward from the cap tread, the base rubber ply has a JIS-A hardness between 48 and 60 at room temperature, and a cross sectional area of the base rubber ply in the meridian cross section is within a range from 20% to 50% of a cross sectional area of the tread rubber.

A cross sectional area of the base rubber ply with a low hardness is formed to fall within the range from 20% to 50% of the cross sectional area of the tread rubber. That is, a thickness of the base rubber ply is made relatively thick in the tread rubber. Accordingly, the rigidity of the whole of the tread rubber, i.e., the rigidity of the whole tread, can be decreased, so that the maximum cornering force at high load can be reduced. Consequently, the rollover resistance at high load can be improved. Moreover, because the maximum cornering force at high load can be reduced by decreasing the rigidity of the whole tread, the cap tread can use a rubber that has a higher grip performance. Accordingly, the maximum cornering force at low load can be increased, so that the driving stability and the braking performance at low load can be improved. As a result, the rollover characteristics can be improved while retaining the driving stability.

In yet more preferred embodiments of the pneumatic tire according to the present invention, a bead in which a bead core is arranged is provided tire-radially inward on the sidewall potion, and a bead filler is provided tire-radially outward from the bead core, when Hs is a JIS-A hardness of the bead filler at room temperature, and FH is a filler height, which is a distance between an outward edge and a most distant point in the bead filler, the outward edge being a position tire-radially most outward of the bead filler in the meridian cross section, G satisfies 6≤G≤11, G being obtained from a following equation (7), which is a relation between the JIS-A hardness of the bead filler Hs, the filler height FH (mm), the tire outside diameter OD, and the aspect ratio β.

$$G=(Hs \times FH)/(OD \times \beta) \quad (7)$$

The bead filler is provided by calculating the relation G between the Japanese Industrial Standards (JIS)-A hardness Hs of the bead filler at room temperature, the filler height FH, the tire outside diameter OD, and the aspect ratio in accordance with Equation (7) to satisfy 6 G 11, so that the rigidity of the bead filler can be appropriate. In other words, when G is smaller than 6, because the hardness Hs of the bead filler is too low, or the filler height FH is too low, there is a possibility that to retain the driving stability at low load is difficult. On the other hand, when G is larger than 11, because the hardness Hs of the bead filler is too high, or the filler height FH is too high, there is a possibility that the rigidity of the bead filler is too high, consequently, there is a possibility that to reduce the maximum cornering force at high load is difficult.

For this reason, the rigidity of the bead filler can become appropriate by designing the bead filler to have the relation between the JIS-A hardness Hs of the bead filler at room temperature, the filler height FH, the tire outside diameter OD, and the aspect ratio β that satisfies 6≤G≤11. Accordingly, the driving stability at low load can be assured more securely, and the maximum cornering force at high load can be reduced. As a result, the rollover characteristics can be improved while retaining the driving stability more reliably.

In yet even more preferred embodiments of the pneumatic tire according to the present invention, when the outline area on the vehicle-outer-side in the tire width direction differs from that on the vehicle inner side in the tire width direction, the outline area L1 is the outline area on the vehicle-outer-side in the tire width direction, and the K1 to be obtained from the equation (1) is a relation between the outline area L1 on the vehicle-outer-side in the tire width direction, and the tread development width TDW, and Llin is the outline area on the vehicle inner side in the tire width direction, a relation between $K1_{in}$ and K1 satisfies $K1_{in} \leq K1 \times 0.9$, $K1_{in}$ being obtained from a following equation (8), which is a relation between the outline area $K1_{in}$ and the tread development width TDW

$$K1_{in}=L1_{in}/(TDW \times 0.5) \quad (8)$$

The outline area on the vehicle-outer-side in the tire width direction differs from the that on the vehicle inner side in the tire width direction, and the relation $K1_{in}$ between the outline area $L1_{in}$ on the vehicle-inner-side in the tire width direction and the tread development width TDW is equal to 0.9 times of or less than the relation K1 between the outline area L1 on the vehicle-outer-side in the tire width direction and the tread development width TDW. Accordingly, the outline area on the vehicle inner side in the tire width direction is smaller, so that the tread surface on the vehicle inner side in the tire width direction has a larger area in which the shoulder-side arc and the shoulder arc are formed as compared with the tread surface on the vehicle-outer-side in the tire width direction. Thus, when the vicinity of the shoulder on the vehicle inner side in the tire width direction is in contact with the ground, a too high contact pressure can be suppressed, so that wear caused by the too high contact pressure can be prevented. On the other hand, when the vicinity of the shoulder on the vehicle-outer-side in the tire width direction is in contact with the ground, the rollover characteristics can be improved. As a result, the rollover characteristics and the wear resistance can be improved.

In still further preferred embodiments of the pneumatic tire according to the present invention, the $K1_{in}$ satisfies $0.4 \leq K1_{in} \leq 0.6$.

In this case, because $K1_{in}$ is designed to satisfy $0.4 \leq K1_{in} \leq 0.6$, retention of the maximum cornering force at low load, and reduction in the contact pressure on the vicinity of the shoulder on the vehicle inner side in the tire width direction in contact with the ground can be both achieved. In other words, when $K1_{in}$ is less than 0.4, because the outline area $K1_{in}$ on the vehicle inner side in the tire width direction is too small, there is a possibility that the maximum cornering force at low load is too small. On the other hand, when $K1_{in}$ is more than 0.6, because the outline area $K1_{in}$ on the vehicle inner side in the tire width direction is not very narrow, there is a possibility that the contact pressure on the vicinity of the shoulder on the vehicle-inner-side in the tire width direction in contact with the ground cannot be reduced effectively. Therefore, retention of the maximum cornering force at low load, and reduction in the contact pressure on the vicinity of the shoulder on the vehicle inner side in the tire width direction in contact with the ground can be both achieved by designing the relation $K1_{in}$ between the outline area $L1_{in}$ on the vehicle inner side in the tire width direction and the tread development width TDW to satisfy $0.4 \leq K1_{in} \leq 0.6$. As a result, the rollover characteristics and the wear resistance can be improved.

In still even further preferred embodiments of the pneumatic tire according to the present invention, a belt ply is provided tire-radially inward from the tread portion, and a belt cover ply is provided tire-radially outward from the belt ply, and the belt cover ply includes a central region that contains a reinforcing cord and is centered in the tire width direction, and shoulder regions that are positioned on both sides of the central region in the tire width direction. A ratio of a cover tensile-rigidity index Ec in the center region to a cover tensile-rigidity index Es in the shoulder region satisfies 1.0<Es/Ec, when the cover tensile-rigidity index Ec in the center region is obtained from a following equation (9), where Dc is number of reinforcing cords per 50 mm in a direction of arrangement of the reinforcing cord arranged in the center region, and Sc is an extension rate (%) of one of the reinforcing cords arranged in the center region when a load of 50 N is applied. The cover tensile-rigidity index Es in the shoulder region is obtained from a following equation (10), where Ds is number of reinforcing cords per 50 mm in a direction of arrangement of the reinforcing cord arranged in the shoulder region, and Ss is an extension rate (%) of one of the reinforcing cords arranged in the shoulder region when a load of 50 N is applied

$$Ec=Dc/Sc \quad (9)$$

$$Es=Ds/Ss \quad (10).$$

In this case, because the belt cover ply is formed to have the ratio of the cover tensile-rigidity index Es in the shoulder region to the cover tensile-rigidity index Ec in the central region that satisfies 1.0<Es/Ec, a change in the contact length in contact of the vicinity of the shoulder with the ground can be small. In other words, when Es/Ec is 1.0 or less, precisely, when the ratio of the cover tensile-rigidity index Es in the shoulder region is less than the cover tensile-rigidity index Ec in the central region, the rigidity of the belt cover ply in the shoulder region is lower than the rigidity in the center region, so that the contact length can easily change in contact of the vicinity of the shoulder with the ground. For this reason, there is a possibility that effective reduction in the maximum cornering force at high load is difficult in contact of the vicinity of the shoulder with the ground. Therefore, by forming the belt cover ply to have the ratio of the cover tensile-rigidity index Es in the shoulder region to the cover tensile-rigidity index Ec in the central region that satisfies 1.0<Es/Ec, the cover tensile-rigidity index Es in the shoulder region can be made larger than the cover tensile-rigidity index Ec in the central region more substantially, so that a change in the contact length in contact of the vicinity of the shoulder with the ground can be small. As a result, the rollover characteristics can be improved more reliably.

In yet still further preferred embodiments of the pneumatic tire according to the present invention, a lug groove is formed on the shoulder, and a recess is formed at a groove bottom of the lug groove outward from a contact end of the tread portion in the tire width direction.

In this case, because the recesses are formed at the bottom of the lug groove arranged outward in the tire width direction from the contact end of the tread, the rigidity of the land portion (rigidity in a shearing direction) in a region outward from the contact end in the tire width direction, i.e., in the non-contact region when traveling normally, can be reduced. Accordingly, when the region outward from the contact end in the tire width direction is in contact with the ground at high load and a large slip angle, for example, when turning, the land portion with a lower rigidity can be brought into contact with the ground. Thus, the maximum cornering force at high load can be reduced more securely. In addition, the recesses are arranged outward from the contact end in the tire width direction, and when traveling normally, the region inward from the contact end in the tire width direction is in contact with the ground. In this manner, the region in which the recessed are arranged is not contact with the ground when traveling normally, such as at low load, so that the maximum cornering force at low load can be retained without influence from arrangement of the recesses. Accordingly, the driving stability at low load can be assured. As a result, the rollover characteristics can be improved while retaining the driving stability more reliably.

In yet still even further preferred embodiments of the pneumatic tire according to the present invention, a depth H and an average D satisfy $0.20 \leq H/D \leq 0.50$, where H is a depth of the recess at a deepest point, and D is an average of groove depths D1 and D2 of the lug groove at both ends of the recess in the tire width direction.

The ratio H/D of the depth H of the recess to the groove depth D of the lug groove is appropriately designed, so that the rigidity of the land portion can be reduced more securely, and the thickness of rubber in areas in which the recesses are provided can be prevented from being excessively thin. As a result, the rollover characteristics can be improved more reliably, and the durability can also be improved.

In still more preferred embodiments of the pneumatic tire according to the present invention, in the recess, an opening area decreases from an opening of the recess toward a deepest point of the recess.

An opening area of the recess gradually decreases as it extends from the opening toward the deepest point of the recess, so that the mold can be easily withdrawn from the recess when molding an pneumatic tire. As a result, the recess can be easily formed.

In still even more preferred embodiments of the pneumatic tire according to the present invention, the recess is arranged between a contact end and a limit contact end, when the limit contact end is set at a point distant 1.3 times of a distance from a center of contact width of the tread portion to the contact end.

The recesses are appropriately arranged in the tread, so that the driving stability and the durability can be improved together.

In yet still more preferred embodiments of the pneumatic tire according to the present invention, in the recess, a cross sectional area gradually increases as toward outward in the tire width direction.

In this case, because the cross-sectional area of the recess gradually increases as it extends outward in the tire width direction, the rigidity of the land portion in the vicinity of the recess gradually decreases as it extends outward in the tire width direction. Therefore, the driving stability can be retained at a large slip angle, as compared with a configuration in which the rigidity of the land portion drops from the vicinity of the contact end. As a result, retention of the driving stability and improvement in the rollover characteristics can be both achieved.

As noted above, these various embodiments of the pneumatic tire according to the present invention can bring an effect that the rollover characteristics are improved while retaining the driving stability.

BRIEF DESCRIPTION OF DRAWINGS

To enable a better understanding of the present invention, and to show how the same may be carried into effect, reference will now be made, by way of example only, to the accompanying drawings, in which:-

[Fig. 1] Fig. 1 is a meridian cross section that depicts a relevant part of an embodiment of a pneumatic tire according to the present invention;
[Fig. 2] Fig. 2 is a detailed view of a portion A in Fig. 1;
[Fig. 3] Fig. 3 is an explanatory view of a circumferential groove of the pneumatic tire shown in Fig. 1;
[Fig. 4] Fig. 4 is a view of a tread as a modified example of the embodiment of the pneumatic tire of Fig. 1;
[Fig. 5] Fig. 5 is an explanatory view of the tread and a bead filler of the pneumatic tire shown in Fig. 1;
[Fig. 6] Fig. 6 is an explanatory view that depicts a modified example of the embodiment of the of pneumatic tire of Fig. 1;
[Fig. 7] Fig. 7 is an explanatory view that depicts a modified example of the embodiment of the pneumatic tire of Fig. 1;
[Fig. 8] Fig. 8 is an explanatory view that depicts a modified example of the embodiment of the pneumatic tire of Fig. 1;
[Fig. 9] Fig. 9 is an explanatory view that depicts a modified example of the embodiment of the pneumatic tire of Fig. 1;
[Fig. 10] Fig. 10 is a view viewed from an arrow-headed line B-B in Fig. 9;
[Fig. 11] Fig. 11 is a detailed view of a portion C shown in Fig. 9;
[Fig. 12] Fig. 12 is an explanatory view of a recess formed in a tapering shape, and is a cross sectional view along a line D-D in Fig. 10;
[Fig. 13] Fig. 13 is an explanatory view of the recess formed in a tapering shape, and is a cross sectional view along a line E-E in Fig. 10;
[Fig. 14] Fig. 14 is an explanatory view of a recess that forms a curved surface, and is a cross sectional view along the line D-D in Fig. 10;
[Fig. 15] Fig. 15 is an explanatory view of the recess that forms a curved surface, and is a cross sectional view along the line E-E in Fig. 10;
[Fig. 16] Fig. 16 is an explanatory view of a modified example of the recess, and is a cross sectional view along the line B-B of Fig. 9;
[Fig. 17] Fig. 17 is an explanatory view of a modified example of the recess, and is a cross sectional view along the line E-E of Fig. 10;
[Fig. 18] Fig. 18 is an explanatory view of a modified example of the recess, and is a cross sectional view along the line E-E of Fig. 10;
[Fig. 19] Fig. 19 is a table that indicates results of performance evaluation tests conducted by a first test method;
[Fig. 20-1] Fig. 20-1 is a table that indicates results of performance evaluation tests conducted by a second test method.
[Fig. 20-2] Fig. 20-2 is a table that indicates results of the performance evaluation tests conducted by the second test method;
[Fig. 21-1] Fig. 21-1 is a table that presents compositions of rubber used for pneumatic tires on which performance evaluation tests are conducted by a third test method;.
[Fig. 21-2] Fig. 21-2 is a table that presents the compositions of rubber used for pneumatic tires on which the performance evaluation tests are conducted by the third test method;
[Fig. 22-1] Fig. 22-1 is a table that indicates results of the performance evaluation tests conducted by the third test method;

## EP 1 892 126 B1

[Fig. 22-2] Fig. 22-2 is a table that indicates results of the performance evaluation tests conducted by the third test method;

[Fig. 23-1] Fig. 23-1 is a table that indicates results of performance evaluation tests conducted by a fourth test method;

[Fig. 23-2] Fig. 23-2 is a table that indicates results of the performance evaluation tests conducted by the fourth test method;

[Fig. 24] Fig. 24 is a table that indicates results of performance evaluation tests conducted by a fifth test method;

[Fig. 25] Fig. 25 is a table that presents characteristics of reinforcing cords used for pneumatic tires on which performance evaluation tests are conducted by a sixth test method;

[Fig. 26-1] Fig. 26-1 is a table that indicates results of the performance evaluation tests conducted by the sixth test method;

[Fig. 26-2] Fig. 26-2 is a table that indicates results of the performance evaluation tests conducted by the sixth test method;

[Fig. 27] Fig. 27 is a table that presents detailed profiles of pneumatic tires on which performance evaluation tests are conducted by a seventh test method; and

[Fig. 28] Fig. 28 is a table that indicates results of the performance evaluation tests conducted by the seventh test method.

EXPLANATIONS OF LETTERS OR NUMERALS

| | |
|---|---|
| 1 | Pneumatic tire |
| 5 | Equatorial plane |
| 10 | Tread |
| 11 | Tread surface |
| 12 | Cap tread |
| 13 | Rib |
| 15 | Sidewall |
| 16 | Shoulder |
| 21 | Belt ply |
| 22 | Carcass |
| 23 | Inner liner |
| 24 | Bead |
| 25 | Bead core |
| 26 | Bead filler |
| 27 | Outward edge |
| 28 | Inner-side inward edge |
| 29 | Outer-side inward edge |
| 31 | Center arc |
| 32 | Shoulder-side arc |
| 33 | Shoulder arc |
| 34 | Side arc |
| 35 | Center-arc end |
| 36 | Shoulder-arc end |
| 41 | Center-arc tangent |
| 42 | Shoulder-arc tangent |
| 45 | Shoulder-side arc extension |
| 46 | Side-arc extension |
| 47 | Virtual tread edge |
| 50 | Circumferential groove |
| 51 | Shoulder-side circumferential groove |
| 52 | Groove-width center |
| 53 | Groove-width-direction edge line |
| 55 | Equatorial-plane-side circumferential groove |
| 56 | Groove-width-center |
| 57 | Groove-width-direction edge line |
| 60 | Tread rubber |
| 61 | Base rubber ply |

62      Wing chip
70      Belt cover ply
71      Central region
72      Shoulder region
75      Reinforcing cord
76      Central-region reinforcing cord
77      Shoulder-region reinforcing cord
80      Lug groove
81      Groove bottom
83      Block portion
85      Recess
86      Sidewall
90      Contact end
91      Limit contact end

DETAILED DESCRIPTION

Exemplary embodiments of a pneumatic tire according to the present invention are described in detail below with reference to the accompanying drawings. The present invention is not limited by the embodiments. The constituents of the embodiments include constituents that can be easily replaced by those skilled in the art and constituents substantially same as the constituents of the embodiments.

(Embodiment)

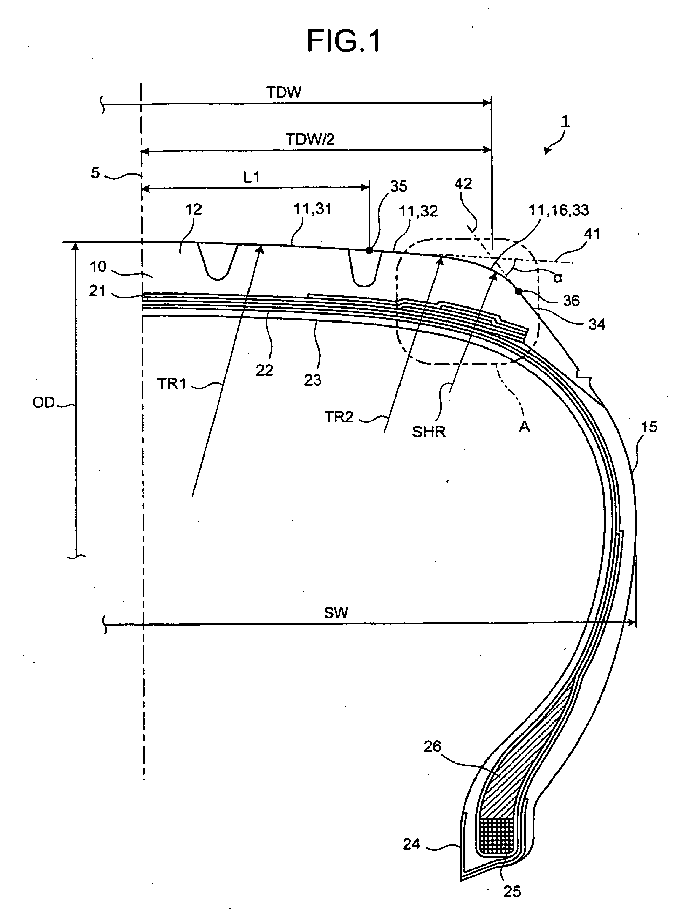

In the following description, the tire width direction is a direction parallel to the rotation axis of a pneumatic tire; the tire width direction inward is a direction toward the equatorial plane in the tire width direction; the tire width direction outward is a direction toward the side opposite to the equatorial plane in the tire width direction; the tire-radial direction is a direction orthogonal to the rotation axis; and the tire circumferential direction is a direction of rotation about the rotation axis. Fig. 1 is a meridian cross section that depicts a relevant portion of the pneumatic tire according to the present invention. In the meridian cross section of a pneumatic tire 1 shown in Fig. 1, the pneumatic tire 1 includes a tread portion 10 that is provided at the tire-radially outmost portion of the pneumatic tire 1. A sidewall 15 is provided from the edge of the tread portion 10 in the tire width direction, that is, from the vicinity of a shoulder 16, to a certain point of the tire-radially inward. In other words, the sidewall 15 is provided on each of both edges of the pneumatic tire 1 in the tire width direction. On the tire-radially inward of the sidewall 15, a bead 24 is provided. Another bead 24 is also provided on the other side of the sidewall 15, so that two beads 24 are arranged in the pneumatic tire 1 symmetrically with respect to an equatorial plane 5. A bead core 25 is provided to the bead 24, and a bead filler 26 is provided to the tire-radially outward of the bead core 25.

A plurality of belt plies 21 are provided to the tire-radially inward of the tread portion 10. A carcass 22 is continuously provided to the tire-radially inward of the belt plies 21 on a side of the sidewalls 15 facing to the equatorial plane 5. The carcass 22 is bent outward in the tire width direction in each of the beads 24 along the bead core 25. An inner liner 23 is formed along the carcass 22 inward of the carcass 22, or on the inner side of the carcass 22 in the pneumatic tire 1.

The tread portion 10 includes a cap tread 12. The cap tread 12 is positioned on the tire-radially outward of the tread portion 10, and is exposed to the outside of the pneumatic tire 1. The portion of the cap tread 12 exposed to the outside, that is, the surface of the cap tread 12 is formed as a tread surface 11. The compound from which the cap tread 12 is made has a 300% tensile modulus of 5 MPa to 10 MPa. In other words, the property of the compound from which the cap tread 12 is made falls within the range from 5 MPa to 10 MPa of the 300% tensile modulus defined by JIS-K6251.

The 300% tensile modulus of the cap tread 12 in the tire width direction is smaller than that in the tire circumferential direction. In other words, the cap tread 12 is made from anisotropic rubber that has a tensile modulus in the tire width direction smaller than that in the tire circumferential direction, and the compound that forms the cap tread 12 uses the anisotropic rubber.

In the meridian cross section of the pneumatic tire 1, a plurality of arcs having different curvature radiuses form the surface of the cap tread 12 or the tread surface 11 serving as the surface of the tread portion 10. Specifically, a center arc 31, a shoulder-side arc 32 and a shoulder arc 33 form the tread surface 11 of the pneumatic tire mounted on a regular rim with an inner pressure of 5% of a regular inner pressure. The regular rim includes "regular rim" defined by Japan Automobile Tire Manufacturers Association (JATMA), "design rim" defined by Tire and Rim Association (TRA), and "measuring rim" defined by European Tire and Rim Technical Organization (ETRTO). The regular inner pressure includes "maximum air pressure" defined by JATMA, the maximum value defined by TRA as described in "tire load limits at various cold inflation pressures", and "inflation pressure" defined by ETRTO. However, the regular inner pressure is 180kPa to the pneumatic tire 1 for passenger cars.

The center arc 31 among the arcs forming the tread surface 11 is centered in the tire width direction on the tread surface 11, includes the equatorial plane 5, and extends both sides of the equatorial plane 5 in the tire width direction as the equatorial plane 5 is centered. The center arc 31 forms an arc shape in convex outward in the tire-radial direction, of which a radius from the vicinity of the equatorial plane 5 in the tire-radial direction is the largest.

The shoulder-side arc 32 is positioned on the vehicle-outer side of the center arc 31 in the tire width direction or on each of both sides of the center arc 31. The shoulder-side arc 32 forms an arc shape in convex outward in the tire-radial direction. The shoulder arc 33 is positioned on the outer side of the shoulder-side arc 32 in the tire width direction. The shoulder arc 33 forms the shoulder 16, and forms an arc shape in convex outward in the tire-radial direction.

In other words, on the tread surface 11, the shoulder-side arc 32 is positioned on the vehicle-outer side or the both sides of the center arc 31 in the tire width direction, which is in the center of the tire width. The shoulder arc 33 is positioned on the vehicle-outer side or the both sides on the outer side of the shoulder-side arc 32 in the tire width direction. The center arc 31 and the shoulder-side arc 32 are connected to each other and continuously formed, and the shoulder-side arc 32 and the shoulder arc 33 are connected to each other and continuously formed. A curvature radius TR1 of the center arc 31, a curvature radius TR2 of the shoulder-side arc 32, and a curvature radius SHR of the shoulder arc 33, respectively, which are positioned as described above, are different from one another.

Here, the vehicle-outer side in the tire width direction is an edge side positioned outward in the vehicle-width direction from among the two edges of the pneumatic tire 1 in the tire width direction when the pneumatic tire 1 is installed in a vehicle(not shown). The vehicle inner side in the tire width direction is an edge side positioned inward in the vehicle-width direction, or an edge side toward the center in the vehicle-width direction, from among the two edges of the pneumatic tire 1 in the tire width direction.

A side arc 34 is formed on the outer side of the shoulder arc 33 in the tire width direction. While being on the outer side of the shoulder arc 33 in the tire width direction, the side arc 34 is connected to the shoulder arc 33 and extends from the shoulder arc 33 toward the sidewall 15.

The sidewalls 15 are provided on the tire-radially inward of the tread portion 10 on the both edges of the pneumatic tire 1 in the tire width direction. Each of the two sidewalls 15 on the edges curves such that the sidewall 15 forms an arc in convex outward in the tire width direction in the meridian cross section of the sidewall 15. Furthermore, because each of the two sidewalls 15 on the edges curves such that the sidewall 15 forms the arc in convex outward in the tire width direction, the distance between two sidewalls 15 at positions outmost from the equatorial plane 5 in the tire width direction represents the total width of the pneumatic tire 1.

The tread surface 11 of the pneumatic tire 1 is formed as descried in a way that K1 obtained by Equation (11) below satisfies $0.6 \leq K1 \leq 0.8$, and K2 obtained by Equation (12) below satisfies $0.9 \leq K1 \leq 2.0$. In Equations (11) and (12), L1 denotes an outline area representing a width between the equatorial plane 5 in the tire width direction and a center-arc end 35 serving as the end of the center arc 31 in the tire width direction; OD denotes the outside diameter of the pneumatic tire 1, that is, the diameter of the portion of the tread surface 11 having the largest radius in the tire-radial direction; and TDW denotes the tread development width that is the width of the tread surface 11 in the tire width direction. K1 obtained by Equation (11) represents the relation between the outline area L1 and the tread development width TDW. K2 obtained by the following Equation (12) represents the ratio of the curvature radius TR1 of the center arc 31 to the tire outside diameter OD.

$$K1 = L1 / (TDW \times 0.5) \qquad\qquad (11)$$

$$K2 = TR1 / OD \qquad\qquad (12)$$

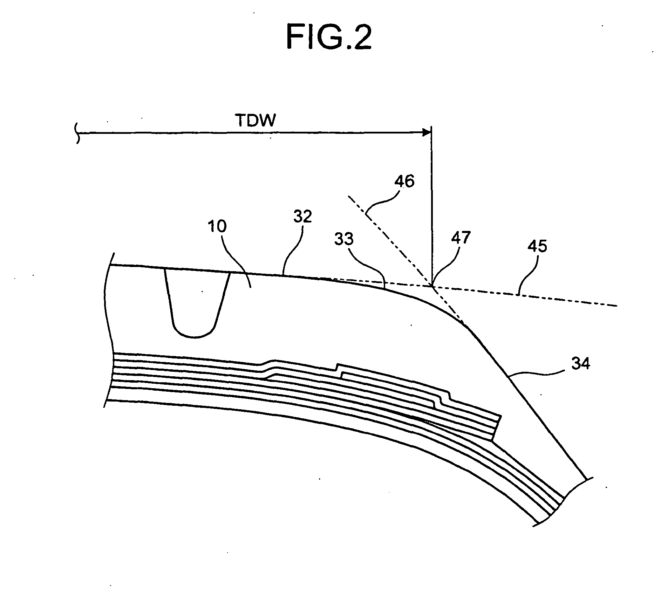

Fig. 2 is a detailed view of a portion A in Fig. 1. The tread development width TDW is a distance between two virtual tread edges 47 on both sides of the tread portion 10 in the tire width direction. Specifically, the virtual tread edge 47 is the intersection between an shoulder-side-arc extension 45 and a side-arc extension 46 in the meridian cross section of the pneumatic tire 1. The shoulder-side-arc extension 45 is a virtual line that extends from one of the shoulder-side arcs 32 on both sides of the pneumatic tire 1 in the tire width direction. The side-arc extension is a virtual line that extends from the side arc 34 connected to the shoulder arc 33 formed to be continuous from the shoulder-side arc 32. The virtual tread edges 47 are formed on both edge sides in the tire width direction, and the distance between the virtual tread edges 47 in the tire width direction is regarded as the tread development width TDW.

The pneumatic tire 1 is formed in a way that K3 obtained in accordance with Equation (13) below satisfies 0.40≤K3≤0.48. In Equation (13), β denotes the aspect ratio of the pneumatic tire 1, and SW denotes the total width of the pneumatic tire 1 in the tire width direction. K3 represents the relation between the aspect ratio β, the tread development width TDW and the total width SW.

$$K3=(\beta \times TDW)/(100 \times SW) \qquad (13)$$

In the pneumatic tire 1, an angle α described below satisfies 35°≤α≤60°. The angle α is one of a plurality of angles formed by a center-arc tangent 41 and a shoulder-arc tangent 42 when intersecting with each other. The center-arc tangent 41 passes through the center-arc end 35 and touches the center arc 31, and the shoulder-arc tangent 42 passes through a shoulder-arc end 36 that is an outward end of the shoulder arc 33 in the tire width direction and touches the shoulder arc 33. The angle α is positioned tire-radially inward from the center-arc tangent 41 and outward from the shoulder-arc tangent 42 in the tire width direction.

The tread surface 11 of the pneumatic tire 1 is formed in a way that K4 obtained by Equation (14) below satisfies 0.025≤K4≤0.035. K4 represents the ratio of a curvature radius TR1 of the center arc 31 to a curvature radius SHR of the shoulder arc 33.

$$K4=SHR/TR1 \qquad (14)$$

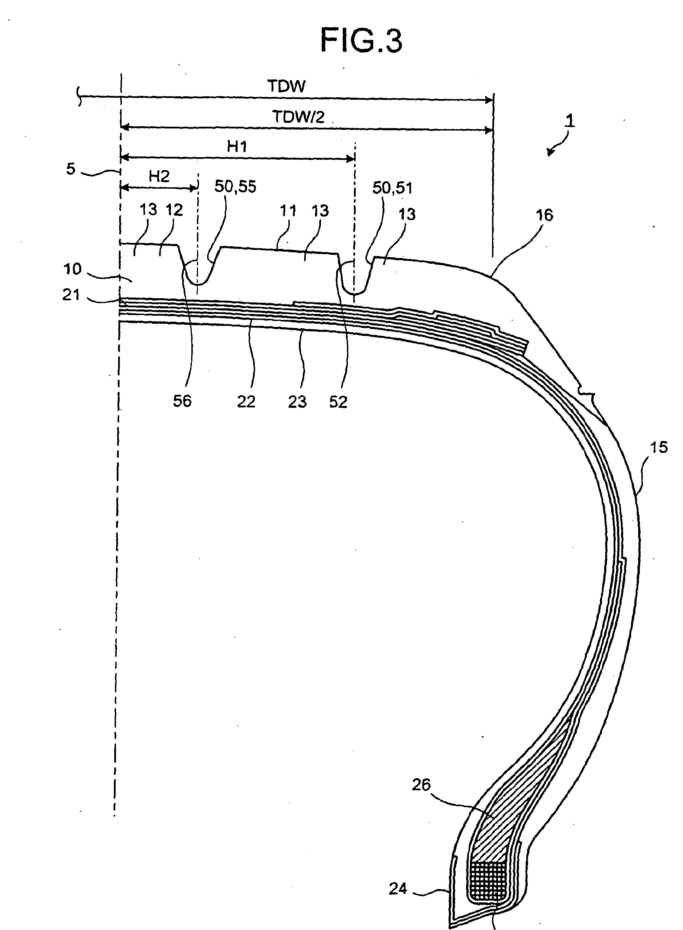

Fig. 3 is an explanatory view of a circumferential groove of the pneumatic tire shown in Fig. 1. The tread surface 11 of the tread portion 10 is provided with a plurality of circumferential grooves 50 forming a tread pattern. The circumferential grooves 50 are formed along the tire circumferential direction, and the circumferential grooves 50 are formed substantially in parallel in the tire width direction on the tread surface 11. The tread surface 11 is provided with a plurality of ribs 13 serving as land portions compartmentalized by the circumferential grooves 50.

The circumferential grooves 50 on both edges of the pneumatic tire 1 in the tire width direction among the circumferential grooves 50, or the circumferential grooves 50 closest to the shoulders 16 among those between the equatorial plane 5 and the shoulders 6, are shoulder-side circumferential grooves 51. The circumferential grooves 50 closest to the equatorial plane 5 among those between the equatorial plane 5 and the shoulders 6 are equatorial-plane-side circumferential grooves 55.

The positions of the shoulder-side circumferential groove 51 and the equatorial-plane-side circumferential groove 55 are described in detail below. The shoulder-side circumferential groove 51 is provided in the position where T1 obtained in accordance with Equation (15) below satisfies 0.55≤T1≤0.65. In Equation (15), T1 represents the relation between the tread development width TDW and a distance H1 denoting a distance in the tire width direction between the equatorial plane 5 and a groove-width center 52 of the shoulder-side circumferential groove 51.

$$T1=H1/(TDW \times 0.5) \qquad (15)$$

The equatorial-plane-side circumferential groove 55 is provided in the position where T2 obtained in accordance with Equation (16) below satisfies 0.15≤T2≤0.20. In Equation (16), T2 represents the relation between a tread development width TDW and a distance H2 denoting a distance in the tire width direction between the equatorial plane 5 and a groove-width center 56 of the equatorial-plane-side circumferential groove 55.

$$T2=H1/(TDW \times 0.5) \qquad (16)$$

The groove-width centers 52 and 56 are the centers of the openings portions of the circumferential grooves 50 formed on the tread surface 11 in the groove-width direction of the circumferential grooves 50.

When a vehicle in which the pneumatic tire 1 is installed travels, the pneumatic tire 1 rotates in a manner that the lower-positioned portion of the tread surface 11 is in contact with the road surface (not shown). Because the tread surface 11 is in contact with the road surface while the vehicle travels, a load resulting from the weight of the vehicle is applied to the tread surface 11. The load applied to the tread surface 11 changes depending on a traveling condition of the vehicle. When cornering at a low speed, a relatively low load is applied to the tread surface 11. By contrast, when changing a lane or cornering at a high speed, a relatively high load is applied to the tread surface 11.

While the vehicle is traveling, the tread surface 11 is in contact with the road surface as the applied load is changing as described above, and the tread surface 11 deforms due to the applied load. Depending on the deformation of the tread surface 11, the maximum value of the cornering force, that is, the maximum cornering force, is changed in each traveling condition.

Specifically, when a low load is applied to the tread surface 11, the tread surface 11 tends not to deform. However, the tread surface 11 of the pneumatic tire 1 is designed to have the relation K1 between the outline area L1 and the tread development width TDW to satisfy $0.6 \leq K1 \leq 0.8$, and the ratio K2 of the curvature radius TR1 of the center arc 31 to the tire outside diameter OD to satisfy $0.9 \leq K2 \leq 2.0$. Accordingly, a shape of the tread surface 11 at low load, for example, 40% of the maximum load to be applied to the pneumatic tire 1, is approximated to flat, so that a large contact area at low load is obtained.

In other words, by designing the ratio K2 of the curvature radius TR1 of the center arc 31 to the tire outside diameter OD to be 0.9 or more, the curvature radius TR1 of the center arc 31 can be adequately large; and by setting K2 to 2.0 or less, an excessively large difference can be prevented between the curvature radiuses of the center arc 31 and the shoulder-side arc 32, and a large stress applied around the center-arc end 35 can be prevented.

When K1 representing the relation between the outline area L1 and a tread development width TDW is 0.6 or more, the center arc 31 having the larger curvature radius can be formed in a large area. When K1 is 0.8 or less, the area in which the shoulder-side arc 32 is formed can be assured and the curvature radius can gradually diminish from the center arc 31 to the shoulder arc 33.

In this manner, the profile of the tread surface 11 can be approximated to flat by designing K1 representing the relation between the outline area L1 and the tread development width TDW to satisfy $0.6 \leq K1 \leq 0.8$ and K2 representing the ratio of the curvature radius TR1 to the tire outside diameter OD to satisfy $0.9 \leq K2 \leq 2.0$. Consequently, the contact area under low load, for example, 40% of the maximum load, can be increased, and the maximum cornering force at low load can be increased. Accordingly, the driving stability during at low load can be increased. The maximum load includes "maximum load capacity" defined by JATMA, the maximum value described in "tire load limits at various cold inflation" defined by TRA, and "load capacity" defined by ETRTO.

When a high load is applied to the tread surface 11, the tread surface 11 tends to deform. However, the contact area of the pneumatic tire 1 is not so large when a high load is applied, because the pneumatic tire 1 is formed in a way that K3 representing the relation between the aspect ratio β, the tread development width TDW1, and the total width SW satisfies $0.40 \leq K3 \leq 0.48$.

In other words, when K3 representing the relation between the aspect ratio β, the tread development width TDW1, and the total width SW is 0.40 or more, the tread development width TDW relative to the total width SW of the pneumatic tire 1 can be smaller. When K3 is 0.48 or less, the minimum tread development width TDW relative to the total width SW can be assured. Accordingly, an increase in the contact area under high load, for example, 100% of the maximum load of the pneumatic tire 1 onto the tread surface 11, can be reduced, and the maximum cornering force at high load can be reduced. Hence, the rollover resistance at high load can be improved. As a consequence, the rollover characteristics can be improved while retaining the driving stability.

Because the pneumatic tire 1 is formed in a way that the angle α formed by the center-arc tangent 41 and the shoulder-arc tangent 42 satisfies $35° \leq α \leq 60°$, the rollover characteristics can be improved more reliably. Specifically, by setting the angle α formed by the center-arc tangent 41 and the shoulder-arc tangent 42 to 35° or larger, the angle near the shoulder 16 can be largely different from that of the tread surface 11, the shoulder 16 positioned between the tread surface 11 and the sidewall 15. In other words, the shoulder 16 can drop at a steep angle. Moreover, by setting the angle α formed by the center-arc tangent 41 and the shoulder-arc tangent 42 to 60° or smaller, the rigidity around the shoulder arc 33 can be assured. The rigidity prevents a large portion of the shoulder 16 from contacting with the road surface due to deformation of the shoulder 16 under high load and a large slip angle, and prevents the contact area from being increased because the shoulder 16 deforms and contacts with the road surface. Accordingly, the maximum cornering force at high load can be reduced more reliably, and the rollover resistance at high load can be improved more reliably. As a consequence, the rollover characteristics can be improved more reliably.

Because the pneumatic tire 1 is formed in a way that K4 representing the ratio of the curvature radius TR1 of the center arc 31 to the curvature radius SHR of the shoulder arc 33 satisfies $0.025 \leq K4 \leq 0.035$, the rollover characteristics can be improved more reliably. In other words, by setting the ratio K4 of the curvature radius TR1 of the center arc 31 to the curvature radius SHR of the shoulder arc 33 to 0.025 or more, the rigidity near the shoulder arc 33 can be assured. On the other hand, by setting K4 representing the ratio of the curvature radius TR1 of the center arc 31 to the curvature radius SHR of the shoulder arc 33 to 0.035 or less, the shoulder 16 can have the large angle and be steep. The rigidity and the angle prevent a large portion of the shoulder 16 from being in contact with the ground due to deformation of the shoulder 16 under high load and a large slip angle, and prevent the contact area from being increased due to deformation of the shoulder 16. Accordingly, the maximum cornering force at high load can be reduced more securely, and the rollover resistance at high load can be improved more reliably. In consequence, the rollover characteristics can be improved more reliably.

Because the compound having the 300% tensile modulus of 5 MPa to 10 MPa is used for the cap tread 12, a frictional force in the tire width direction at high load and a large slipping angle can be reduced and the rollover resistance can be improved. In consequence, the rollover characteristics can be improved more reliably.

Because the anisotropic rubber having a 300% tensile modulus in the tire width direction smaller than that in the tire circumferential direction is used as the compound from which the cap tread 12 is made, the rollover resistance can be improved. Specifically, the use of the anisotropic rubber as the compound of the cap tread 12 makes it possible to reduce a frictional force in the tire width direction at high load and a large slipping angle, thereby improving the rollover resistance. In consequence, the rollover characteristics can be improved more reliably.

The compound used for the cap tread 12 and having the 300% tensile modulus of 5 MPa to 10 MPa can be used for a part of the cap tread 12 or for the whole of the cap tread 12. Similarly, the anisotropic rubber used as the compound for forming the cap tread 12 and having the modulus in the tire width direction smaller than that in the tire circumferential direction can be used for a part of the cap tread 12 or for the whole of the cap tread 12. The use of the compound and the anisotropic rubber for at least a part of the cap tread 12 reduces the frictional force in the tire width direction at high load and a larger slip angle, and improves the rollover characteristics more reliably.

The rollover characteristics can be improved and the driving stability can be retained as well more reliably by providing the shoulder-side circumferential groove 51 in the position where T1 satisfies $0.55 \leq T1 \leq 0.65$, T1 being calculated to represent the relation between the tread development width TDW and the distance H1 between the equatorial plane 5 and the groove-width center 52 of the shoulder-side circumferential groove 51 in the tire width direction. In other words, by setting the distance H1 between the equatorial plane 5 and the groove-width center 52 of the shoulder-side circumferential groove 51 to 55% of the half of the tread development width TDW or more, the shoulder-side circumferential grooves 51 is prevented from being too close to the equatorial plane 5 in the tire width direction. Accordingly, a decrease in the rigidity of the tread portion 10 in the vicinity of the center in the tire width direction, more specifically, the block rigidity which is the rigidity of the rib 13 formed on the tread portion 10, can be prevented, and the block rigidity in the vicinity of the center in the tire width direction is assured. Hence, the driving stability can be assured.

When the distance H1 between the equatorial plane 5 and the groove-width center 52 of the shoulder-side circumferential groove 51 is 65% of the half of the tread development width TDW, the shoulder-side circumferential groove 51 is prevented from being too close to the outer side, that is, the shoulder 16 in the tire width direction. Consequently, a too high rigidity in the vicinity of the center in the tire width direction is prevented, so that too much increase in the cornering force at high load is prevented. Accordingly, the rollover characteristics can be improved more reliably. For this reason, by providing the shoulder-side circumferential groove 51 in the position where the relation T1 between the tread development width TDW and the distance H1 between the equatorial plane 5 and the groove-width center 52 of the shoulder-side circumferential groove 51 satisfies $0.55 \leq T1 \leq 0.65$, the appropriate block rigidity in the vicinity of the center in the tire width direction can be achieved. In consequence, the rollover characteristics can be improved and the driving stability can be retained as well more reliably.

The driving stability can be assured more reliably because the equatorial-plane-side circumferential groove 55 is provided in the position where T2 satisfies $0.15 \leq T2 \leq 0.20$, T2 being calculated to represent the relation between the tread development width TDW and the distance H2 between the equatorial plane 5 and the groove-width center 56 of the equatorial-plane-side circumferential groove 55. Specifically, by setting the distance H2 between the equatorial plane 5 and the groove-width center 56 of the equatorial-plane-side circumferential groove 55 to 15% of the half of the tread development width TDW or more, the equatorial-plane-side circumferential groove 55 can be prevented from being too close to the equatorial plane 5 in the tire width direction. Consequently, a too low rigidity in the vicinity of the center in the tire width direction can be prevented, and a response of the pneumatic tire 1 when cornering can be assured.

When the distance H2 between the equatorial plane 5 and the groove-width center 56 of the equatorial-plane-side circumferential groove 55 is 20% of the half of the tread development width TDW or less, the equatorial-plane-side circumferential groove 55 can be prevented from being too close to the shoulder 16 in the tire width direction. Accordingly, a too high rigidity in the vicinity of the center in the tire width direction is suppressed, and a too quick response of the pneumatic tire 1 when cornering is avoided. For this reason, the block rigidity in the vicinity of the center in the tire width direction can be appropriate by providing the equatorial-plane-side circumferential groove 55 in the position where the relation T2 between the tread development width TDW and the distance H2 between the equatorial plane 5 and the groove-width center 56 of the equatorial-plane-side circumferential groove 55 satisfies $0.15 \leq T2 \leq 0.20$. Because of the rigidity, the response of the pneumatic tire 1 when cornering can be appropriate and the driving stability can be assured more reliably.

The number of the circumferential grooves 50 does not matter as long as a plurality of the circumferential grooves 50 is provided on the tread surface 11. The rollover characteristics can be improved more reliably while the driving stability can be retained by forming the shoulder-side circumferential groove 51 among the circumferential grooves 50, which is closest to the shoulder 16 between the equatorial plane 5 and the shoulder 16, in the position where T1 is in the above range, T1 representing the relation between the tread development width TDW and the distance H1 between the shoulder-side circumferential groove 51 and the equatorial plane 5. The driving stability can be improved more reliably by forming the equatorial-plane-side circumferential groove 55 among the circumferential grooves 50, which is closest to the equatorial plane 5 between the equatorial plane 5 and the shoulder 16, in the position where T2 is in the above range, T2 representing the relation between the tread development width TDW and the distance H2 between the equatorial-plane-side circumferential groove 55 and the equatorial plane 5.

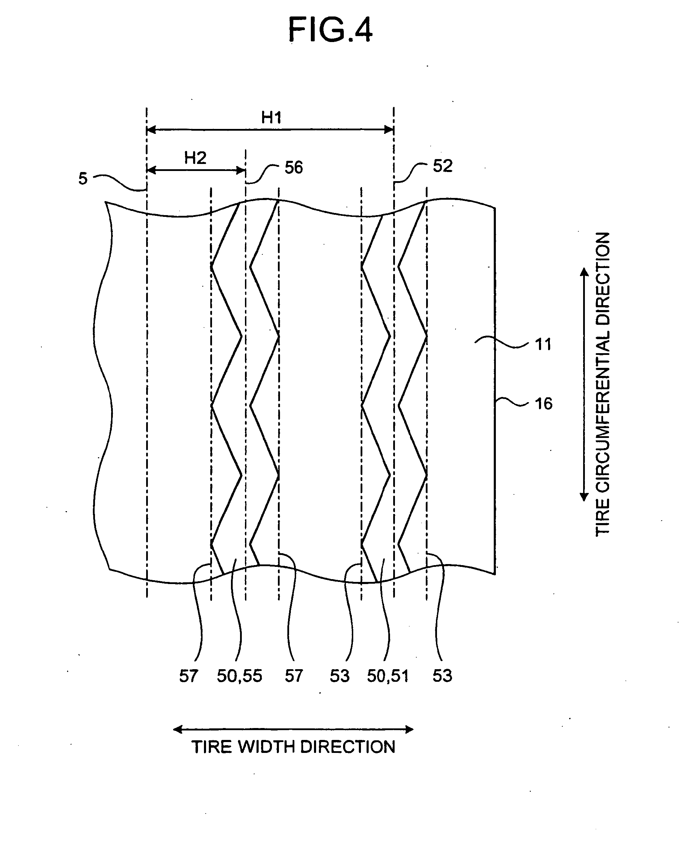

Fig. 4 is a modified example of the embodiment of the pneumatic tire of Fig. 1 and is a view that depicts the tread. The circumferential grooves 50 can be formed not in the precise tire circumferential direction. It suffices that the circumferential grooves 50 are formed approximately in the tire circumferential direction and can be formed in the direction diagonal to the tire width direction or can be formed along a curved line or in zigzag. In such a case where the circumferential groove 50 is formed as extending in the tire circumferential direction while extending inward and outward repeatedly in the tire width direction between the edges of the circumferential groove 50, it suffices that the position of the circumferential groove 50 is determined by determining the center between the edges of the circumferential groove 50 in the tire width direction as the groove-width center.

For example, as shown in Fig. 4, when the circumferential groove 50 is formed in zigzag, it suffices that the centerline between virtual lines passing through the respective edges of the circumferential groove 50 in the tire circumferential direction is determined as the groove-width center. Specifically, when the shoulder-side circumferential groove 51 is formed in zigzag, the centerline between a groove-width-direction edge line 53 at the side of the shoulder 16 and the groove-width-direction edge line 53 at the side of the equatorial plane 5 in the tire width direction can be the groove-width center 52 of the shoulder-side circumferential groove 51. Accordingly, when the shoulder-side circumferential groove 51 is formed in zigzag, it suffices that the distance between the groove-width center 52 and the equatorial plane 5 is determined as H1 and that the shoulder-side circumferential groove 51 is formed in the position where the relation T1 between H1 and the tread development width TDW suffices $0.55 \leq T1 \leq 0.65$. Similarly, when the equatorial-plane-side circumferential groove 55 is formed in zigzag, it suffices that the centerline between a groove-width-direction edge line 57 at the side of the shoulder 16 and the groove-width-direction edge line 57 at the side of the equatorial plane 5 in the tire width direction is determined as the groove-width center 56 of the equatorial-plane-side circumferential groove 55. Accordingly, when the equatorial-plane-side circumferential groove 55 is formed in zigzag, it suffices the distance between the groove-width center 56 and the equatorial plane 5 is determined as H2 and that the equatorial-plane-side circumferential groove 55 is formed in the position where the relation T2 between H2 and the tread development width TDW suffices $0.15 \leq T2 \leq 0.20$.

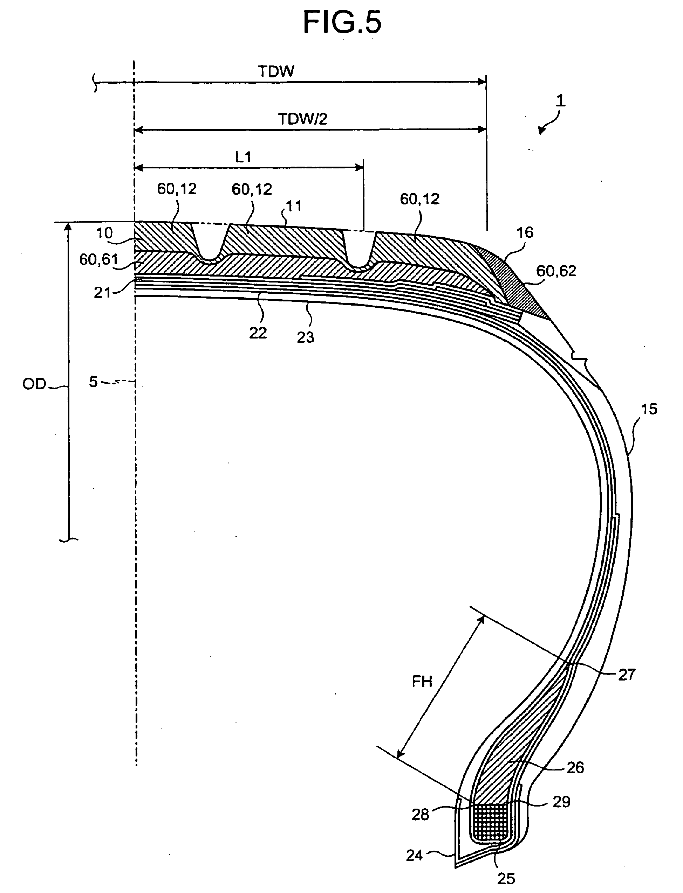

Fig. 5 is an explanatory view of the tread and the bead filler of the pneumatic tire shown in Fig. 1. In many cases, the tread portion 10 is formed of a tread rubber 60 including, in addition to the cap tread 12, a base rubber ply 61 and wing chips 62 that are made from rubber different from that for forming the cap tread 12. It is preferable that the properties of the tread portion 10 and the ratio of the base rubber ply 61 to the tread rubber 60 be defined in a predetermined range. Specifically, as shown in Fig. 5, the tread portion 10 is generally formed of the tread rubber 60 including the cap tread 12, the base rubber ply 61 at the tire-radially inward of the cap tread 12, and the wing chip 62 on each of both sides of the cap tread 12 in the tire width direction. It is preferable that the base rubber ply 61 be formed so that the cross-sectional area of the base rubber ply 61 in the meridian cross section of the tread rubber 60 is 20% to 50% of the cross-sectional area of the tread rubber 60. In addition, the base rubber ply 61 preferably has a JIS-A hardness (JIS K6253) of 48 to 60 at room temperature, specifically, at 20°C.

In many cases, the cap tread 12 has a JIS-A hardness (JIS K6253) of about 64 to 72. For this reason, by forming the base rubber ply 61 having a JIS-A hardness of 48 to 60 at room temperature, the hardness of the base rubber ply 61 to that of the cap tread 12 can be lowered more reliably. Furthermore, by forming the base rubber ply 61 in a way that the cross-sectional area of the base rubber ply 61 in the meridian cross section of the tread rubber 60 is 20% to 50% of the cross-sectional area of the tread rubber 60, the maximum cornering force at high load can be decreased more reliably and the maximum cornering force at low load can be increased.

Specifically, by designing the cross-sectional area of the base rubber ply 61 with a lower hardness to be 20% of that of the tread rubber 60 or larger, the base rubber ply 61 having the lower hardness can have a large thickness. The thickness decreases the rigidity of the entire tread rubber 60, in other words, the rigidity of the entire tread portion 10. Accordingly, the maximum cornering force at high load can be reduced and the rollover resistance at high load can be improved. Because of the decrease in the rigidity of the entire tread portion 10, the rollover resistance at high load can be improved and thus the grip performance at low load can be improved. Hence, because the rubber that achieves higher grip performance can be used for the cap tread 12 to obtain the maximum cornering force at low load, the driving stability and the braking performance at low load can be improved.

By designing the cross-sectional area of the base rubber ply 61 having a lower hardness to be 50% of that of the tread rubber 60 or less, an excessive thickness of the base rubber ply 61 of the lower hardness rubber can be suppressed, and hence the rigidity of the entire tread portion 10 can be prevented from being too low. The rigidity prevents the maximum cornering force at low load from being too low, thereby assuring the driving stability and the control performance at low load. For this reason, by forming the base rubber ply 61 as described above, the maximum cornering force at high load can be decreased more securely while the maximum cornering force at low load can be increased. In consequence, the rollover characteristics can be improved while retaining the driving stability more reliably.

It is preferable that the bead filler 26 be formed in a way that G obtained by Equation (17) below satisfies 6≤G≤11. Specifically, in Equation (17), Hs denotes the JIS-A hardness (JIS K6253) of the bead filler 26 at room temperature, and FH(mm) denotes a filler height which is the distance between an outward edge 27 and an inner-side inward edge 28. The outward edge 27 is the tire-radially outermost point in the meridian cross section of the bead filler 26, and the inner-side inward edge 28 is an edge on the inner side in the tire width direction from among edges on the tire-radially inward of the bead filler 26. In other words, the filler height is the distance between the outward edge 27 and the inner-side inward edge 28 that is the farthest point from the outward edge 27. In this case, it is preferable that the pneumatic tire 1 according to the present invention be formed in a way that G obtained by Equation (17) below satisfies 6≤G≤11, more preferably, 7≤G≤9. Equation (17) is the relation between the JIS-A hardness Hs of the bead filler 26 at room temperature, the filler height FH, the tire outside diameter OD, and the aspect ratio β.

$$G=(Hs \times FH)/(OD \times \beta) \qquad (17)$$

The rigidity of the bead filler 26 can be appropriate by providing the bead filler 26 in a way that G satisfies 6≤G≤11, G being calculated to represent the relation between the JIS-A hardness Hs of the bead filler 26, the filler height FH, the tire outside diameter OD, and the aspect ratio β. In other words, by forming the bead filler 26 in a way that G is 6 or larger, the hardness Hs of the bead filler 26 can be prevented from being too low or the filler height FH from being too small. Accordingly, the rigidity of the bead filler 26 is assured and thus the rigidity the sidewall 15 can be assured. Hence, the maximum cornering force at low load can be assured more reliably.

By forming the bead filler 26 in a way that G is 11 or smaller, the hardness Hs of the bead filler 26 can be prevented from being too high or the filler height FH from being too large. Accordingly, the rigidity of the bead filler 26 can be prevented from being too high and thus the rigidity of the sidewall 15 can be prevented from being too high. Hence, the maximum cornering force at high load can be reduced more reliably. For this reason, the rigidity of the bead filler 26 can be appropriate by providing the bead filler 26 in a way that the relation between the JIS-A hardness Hs of the bead filler 26 at room temperature, the filler height FH of the bead filler, the tire outside diameter OD, and the aspect ratio β satisfies 6≤G≤11. Because of the appropriate rigidity, the driving stability at low load can be assured more reliably and the maximum cornering force at high load can be reduced. In consequence, the rollover characteristics can be improved more reliably while the driving stability can be retained. Furthermore, when the bead filler 26 is provided in a way that relation between the JIS-A hardness Hs of the bead filler 26 at room temperature, the filler height FH of the bead filler, the tire outside diameter OD, and the aspect ratio β satisfies 7≤G≤9, both of the driving stability and the rollover characteristics can be improved.

Although the filler height FH denotes the distance between the outward edge 27 and the inner-side inward edge 28, the filler height FH can denote a different distance. For example, FH can denote the distance between the outward edge 27 of the bead filler 26 and an outer-side inward edge 29 that is an edge on the outer side in the tire width direction on from among the edges of the bead filler 26 on the tire-radially inward. It suffices that the filler height FH is the width of a portion of the bead filler 26 having the largest width in the bead filler 26 in the direction approximately along the sidewall 15 or the carcass 22. The filler height FH can be a distance other than the distance between the outward edge 27 and the inner-side inward edge 28.

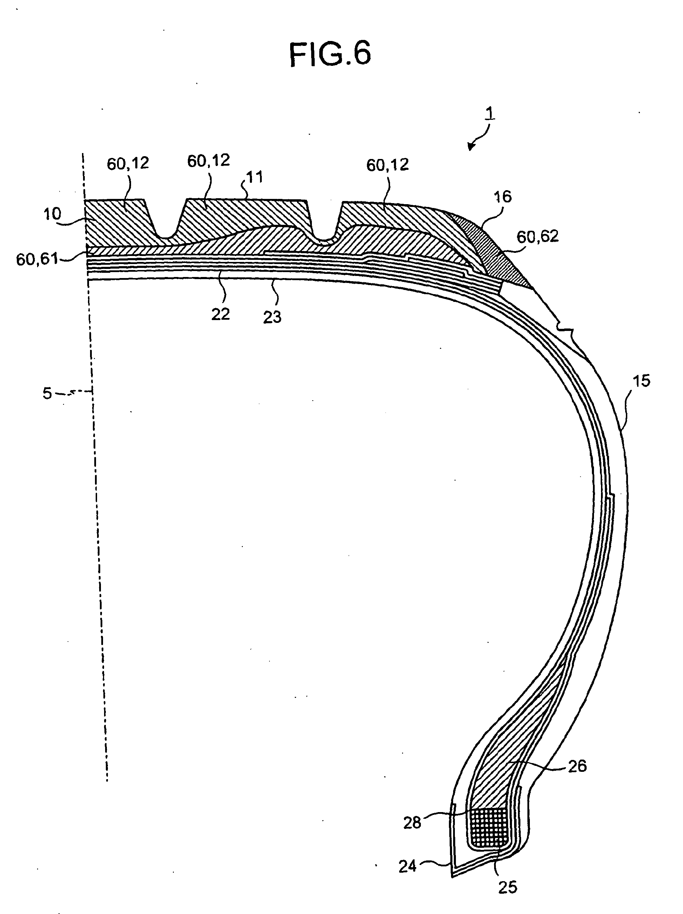

Fig. 6 is an explanatory view that depicts a modified example of the embodiment of the pneumatic tire of Fig. 1. The shape of the base rubber ply 61 is not a problem as long as the base rubber ply 61 is formed in a way that the cross-sectional area of the base rubber ply 61 in the cross section of the tread rubber 60 is 20% to 50% of that of the tread rubber 60. For example, as shown in Fig. 5, the base rubber ply 61 can be formed approximately along the belt ply 21 and have an approximately even thickness in the tire-radial direction. Alternatively, as shown in Fig. 6, the base rubber ply 61 can be formed in a way that a portion close to the shoulder 16 is thicker than a portion close to the equatorial plane 5. The shape of the base rubber ply 61 is not a problem as long as the JIS-A hardness is between 48 and 60 and the cross-sectional area of the base rubber ply 61 in the meridian cross section of the tread rubber 60 is 20% to 50% of the cross-sectional area of the tread rubber 60. By forming the base rubber ply 61 in the above manner, the driving stability can be retained more reliably while the rollover characteristics can be improved.

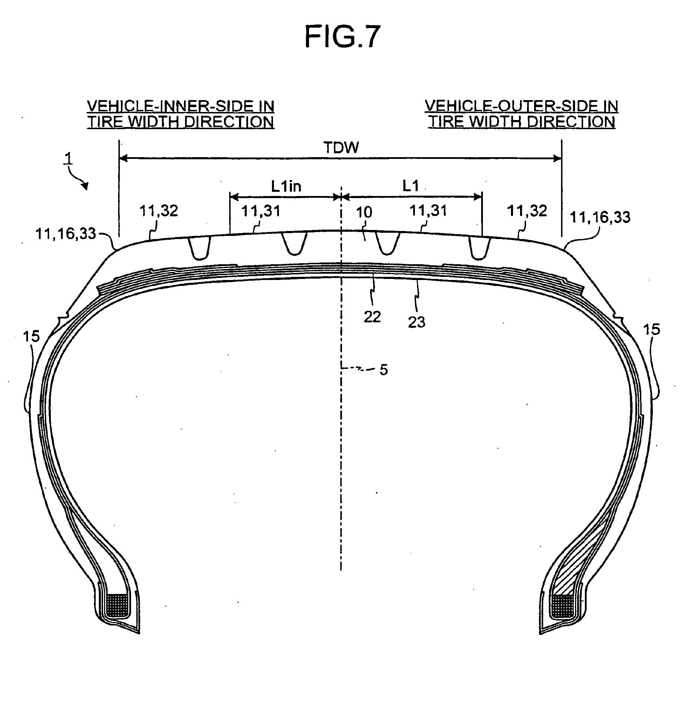

Fig. 7 is an explanatory view that depicts a modified example of the embodiment of the pneumatic tire of Fig. 1. The arcs in the cross section of the tread portion 10 of the present invention are not necessarily formed on each of both sides in the tire width direction as described and can be formed as described on only tire width direction-vehicle-outer side. Specifically, the outline area on the vehicle-outer side in the tire width direction can be different from that on the vehicle inner side in the tire width direction, and the outline area L1 can be the outline area on the vehicle-outer side in the tire width direction. In this case, K1 obtained by the above Equation (1) represents the relation between the tread development width TDW and the outline area L1 on the vehicle-outer side in the tire width direction and satisfies 0.6≤K1≤0.8. In this case, $L1_{in}$ denotes the outline area on the vehicle inner side in the tire width direction and is smaller than the outline area L1 on the vehicle-outer side in the tire width direction. The tread portion 10 is formed in a way that the relation $K1_{in}$ between the outline area $L1_{in}$ and the tread development width TDW satisfies $0.4 \leq K1_{in} \leq 0.6$, $K1_{in}$ being calculated by Equation (18) below. It is preferable that $K1_{in}$ satisfy $0.5 \leq K1_{in} \leq 0.56$. More preferably, $K1_{in}$ and K1 satisfies the relation indicated by $K1_{in} \leq K1 \times 0.9$.

$$K1_{in} = L1_{in}/(TDW \times 0.5) \hspace{4cm} (18)$$

By forming the arcs in a way that the outline area on the vehicle-outer side in the tire width direction is different from that on the vehicle inner side in the tire width direction, and that the relation $K1_{in}$ between the tread development width TDW and the outline area $L1_{in}$ on the vehicle inner side in the tire width direction satisfies $0.4 \leq K1_{in} \leq 0.6$ as described, the outline area on the vehicle inner side in the tire width direction can be smaller. The outline area on the vehicle inner side in the tire width direction can be smaller more reliably when the relation $K1_{in}$ between tread development width TDW and the outline area $L1_{in}$ on the vehicle inner side in the tire width direction is 0.9 times or smaller than the relation K1 between the tread development width TDW and the outline area L1 on the vehicle-outer side in the tire width direction. As a result, compared with the tread surface 11 on the vehicle-outer side in the tire width direction, the tread surface 11 on the vehicle inner side in the tire width direction includes a wider area in which the shoulder-side arc 32 and the shoulder arc 33 are formed. The area increases the contact width when the vicinity of the shoulder 16 on the vehicle inner side in the tire width direction is in contact with the road surface during, for example, cornering, thereby preventing the contact pressure from being too high and the wear resulting from a too high contact pressure. For example, when a negative camber angle is defined, the tread surface 11 on the vehicle inner side in the tire width direction tends to be in contact with the road surface. However, the wear of the tread surface on the vehicle inner side in the tire width direction is prevented in the above case because the contact pressure of the tread surface 11 on the vehicle inner side in the tire width direction tends not to be higher. In this manner, the wear of the shoulder on the vehicle inner side in the tire width direction can be prevented from occurring. On the other hand, when the vicinity of the shoulder 16 on the vehicle inner side in the tire width direction is in contact with the road surface, the rollover characteristics can be improved. In consequence, the rollover characteristics and the wear resistance can be improved.

When $K1_{in}$ satisfying $0.4 \leq K1_{in} \leq 0.6$, the maximum cornering force at low load can be assured, while the contact pressure, which is applied when the vicinity of the shoulder 16 on the vehicle inner side in the tire width direction is in contact with the road surface, can be reduced. Specifically, when $K1_{in}$ is 0.4 or larger, the outline area $L1_{in}$ on the vehicle inner side in the tire width direction can be a certain value and thus the maximum cornering force at low load can be assured. When $K1_{in}$ is 0.6 or smaller, the outline area $L1_{in}$ on the vehicle inner side in the tire width direction can be smaller more reliably and thus the contact pressure, which is applied when the vicinity of the shoulder 16 on the vehicle inner side in the tire width direction is in contact with the road surface, can be reduced more reliably. For this reason, when $K1_{in}$ representing the relation between tread development width TDW and the outline area $L1_{in}$ on the vehicle inner side in the tire width direction satisfies $0.4 \leq K1_{in} \leq 0.6$, the maximum cornering force at low load can be assured and the contact pressure, which is applied when the vicinity of the shoulder 16 on the vehicle inner side in the tire width direction is in contact with the road surface, can be reduced as well. In consequence, the rollover characteristics and the wear resistance can be improved.

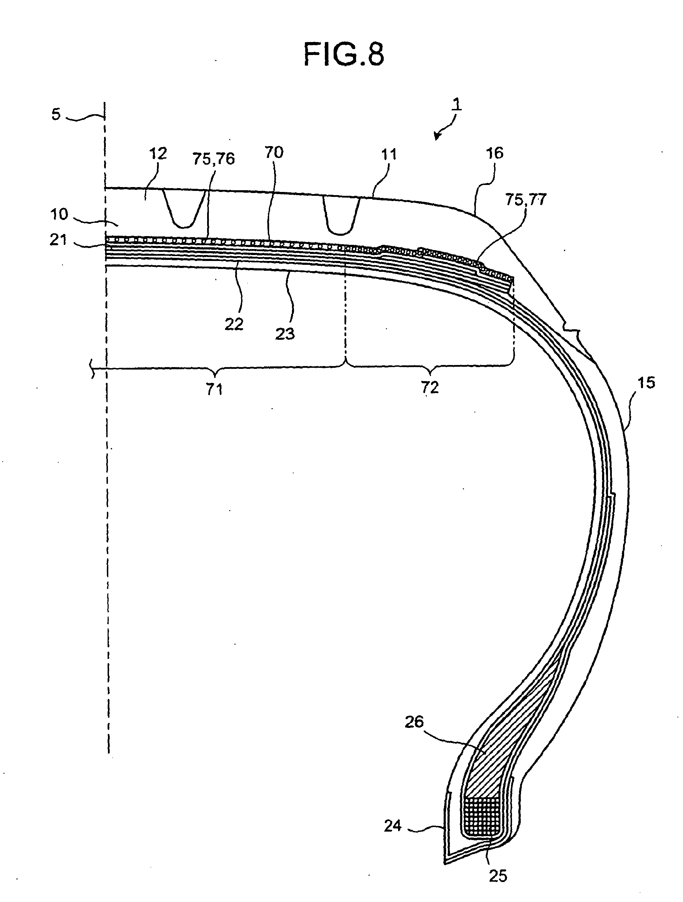

Fig. 8 is an explanatory view that depicts a modified example of the embodiment of the pneumatic tire of Fig. 1. When a belt cover ply 70 is provided to the belt ply 21 on the outer side in the tire width direction, the rigidity of reinforcing cords 75, which are included in the belt cover ply 70 in the vicinity of the center in the tire width direction, can be different from that in the vicinity of the shoulder 16. For example, as shown in Fig. 8, the belt cover ply 70 can be provided to the belt ply 21 on the tire-radially outward in a way that the belt ply 21 covers the belt ply 21 and the tensile force of a central region 71 at the center of the belt cover ply 70 in tire width direction is different from that of a shoulder region 72 on each of both sides of the central region 71 in the tire width direction.

Specifically, the belt cover ply 70 is provided in a way that the ratio of a cover-tensile-force index Ec of the central region 71 of the belt cover ply 70 to a cover-tensile-force index Es of the shoulder region 72 of the belt cover ply 70 satisfies 1.0<Es/Ec. The cover-tensile-force index Ec is obtained by Equation (19) below. In Equation (19), Dc denotes the end count of central-region reinforcing cords 76 that are the reinforcing cords 75 provided to the central region 71 of the belt cover ply 70, that is, the number of the central-region reinforcing cords 76 per 50 mm in the direction in which the central-region reinforcing cords 76 are arranged, and Sc denotes an elongation of one of the central-region reinforcing cords 76 to which a load of 50N is applied. The elongation of the reinforcing cord 75 is measured according to the tensile test method described in JIS L1007, using the reinforcing cord 75 sampled from the belt cover ply 70 of the pneumatic tire 1.

$$Ec = Dc/Sc \qquad\qquad (19)$$

The cover-tensile-force index Es is obtained by Equation (20) below. In Equation (20), Ds denotes the end count of shoulder-region reinforcing cords 77 that are the reinforcing cords 75 provided to the shoulder region 72 of the belt cover ply 70, that is, the number of the shoulder-region reinforcing cords 77 per 50nm in the direction in which the shoulder-region reinforcing cords 77 are arranged, and Ss denotes an elongation of one of the shoulder-region reinforcing cords 77 to which a load of 50N is applied.

$$Ec = Ds/Ss \qquad\qquad (20)$$

It is preferable that the belt cover ply 70 be formed in a way that the cover-tensile-force index Es of the shoulder region 72 of is larger than the cover-tensile-force index Ec of the central region 71, and more preferably, the cover-tensile-force index Ec of the central region 71 and the cover-tensile-force index Es of the shoulder region 72 satisfy 1.2<Es/Ec<4.

When the belt cover ply 70 is formed in a way that the cover-tensile-force index Es of the shoulder region 72 is larger than the cover-tensile-force index Ec of the central region 7, for example, the number of the reinforcing cords 75 in the shoulder region 72 can be larger than that in the central region 71. Alternatively, a tensile force larger than that applied to the central-region reinforcing cords 76 can be applied to the shoulder-region reinforcing cords 77 during its provision so that the initial tensile force of the shoulder-region reinforcing cords 77 is larger than that of the initial tensile force of the central-region reinforcing cords 76. Alternatively, the belt cover ply 70 cab be provided to only the vicinity of the shoulder 16 or the number of the belt cover ply 70 near the shoulder 16 can be larger than that near the equatorial plane 5.

By forming the belt cover ply 70 in a way that the ratio of the cover-tensile-force index Ec of the central region 71 to the cover-tensile-force index Es of the shoulder region 72 satisfies 1.0<Es/Ec as described, change in contact length of the tread surface 11 in the vicinity of the shoulder 16 can be smaller when the tread surface 11 in the vicinity of the shoulder 16 is in contact with the road surface. In other words, when ES/EC is 1.0 or larger, specifically, when the cover-tensile-force index Es of the shoulder region 72 is larger than the cover-tensile-force index Ec of the central region 71, the rigidity of the shoulder region 72 of the belt cover ply 70 can be larger than that of the central region 71 of the belt cover ply 70. Accordingly, the contact length of the shoulder 16 under high load and a large slop angle can be smaller or the change of the contact length can be prevented. Hence, the maximum cornering force at high load can be reduced more reliably.

In this manner, by forming the belt cover ply 70 in a way that the ratio of the cover-tensile-force index Ec of the central region 71 to the cover-tensile-force index Es of the shoulder region 72 satisfies 1.0<Es/Ec, the cover-tensile-force index Es of the shoulder region 72 can be securely larger than the cover-tensile-force index Ec of the central region 71 and thus the contact length of the shoulder 16 under high load and a large slop angle can be smaller or the change of the contact length can be prevented. In consequence, the maximum cornering force at high load can be reduced, and hence the rollover characteristics can be improved more reliably.

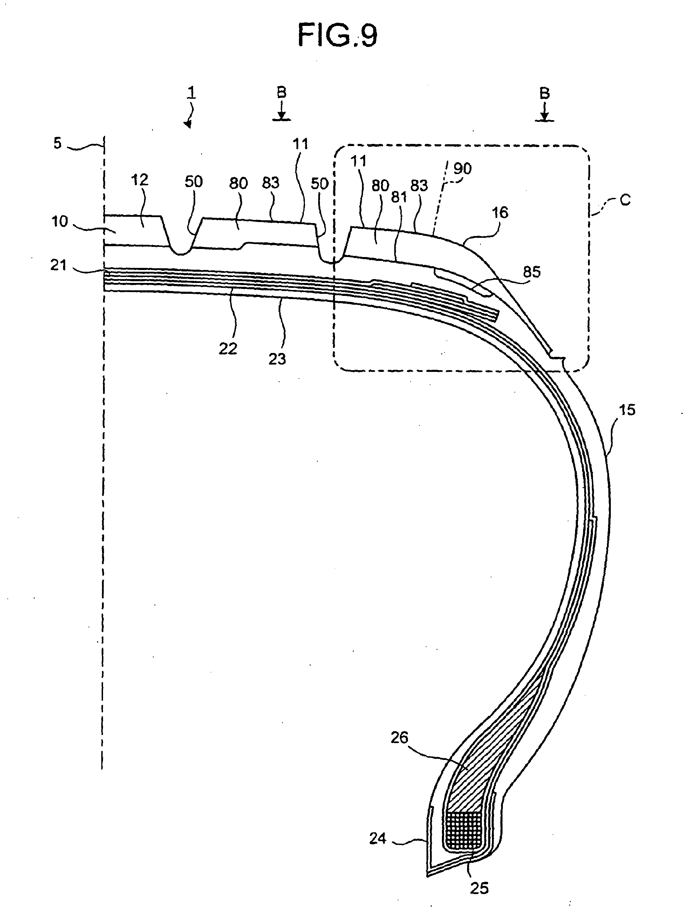

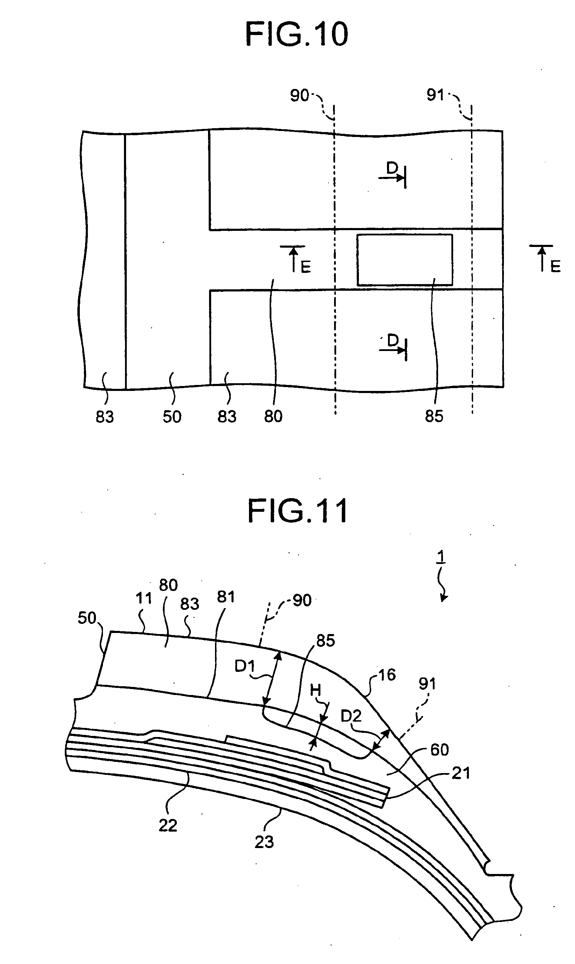

Fig. 9 is an explanatory view that depicts a modified example of the embodiment of the pneumatic tire of Fig. 1. Fig. 10 is a view viewed from an arrow-headed line B-B in Fig. 9. When a lug groove 80 is provided to the tread surface 11 in the shoulder 16, a recess can be provided to the lug groove 80 to reduce the maximum cornering force at high load. For example, when the lug groove 80 is formed on the tread surface 11 in the shoulder 16 as shown in Fig. 9, a recess 85 can be provided in the lug groove 80 in the vicinity of the shoulder 16. The recess 85 forms a recess at a groove bottom 81 of the lug groove 80, and is on the outer side in the tire width direction of a contact end 90 of the pneumatic tire 1. The lug grooves 80 are formed in order in the tire circumferential direction, and the recess 85 is provided to each of the lug grooves 80 of the shoulder 16. The recess 85 forms a rectangle having the width in the groove-width direction of the lug groove 80 slightly narrower than the groove width of the lug groove 80 (Fig. 10). Because the lug groove 80 is thus formed in the vicinity of the shoulder 16, at least land portions in the vicinity of the shoulder 16 serve as block portions 83 compartmentalized by the lug grooves 80 and the circumferential grooves 50.

The contact end 90 of the pneumatic tire 1 is an edge of the face of the pneumatic tire 1 in the tire width direction that is mounted on the regular rim and to which the regular inner pressure is applied and then a regular load is applied, the pneumatic tire 1 is keeping still and being perpendicular to a plate, and the face being in contact with the plate. The regular load includes the "maximum load resistance" defined by JATMA, the maximum value of the "tire load limits at various cold inflation pressures" defined by TRA and "load capacity " defined by ETRTO. In the case of a pneumatic tire for passenger cars, the standard load is 88% of the maximum load capacity.

Because the recess 85 is formed at the groove bottom 81 of the lug groove 80 and is on the outer side of the contact end 90 in the tire width direction, the rigidity of the block portions 83 in a region on the outer side of the contact end 90 in the tire width direction (rigidity in the shear direction), in other words, the region not contacting with the road surface in a normal driving mode, can be reduced. Accordingly, the block portions 83 having the lower rigidity can be in contact with the road surface when the region on the outer side of the contact end 90 in the tire width direction is in contact with the road surface under high load and a large slip angle because of, for example, cornering. In this manner, the maximum cornering force at high load can be reduced more reliably. The recess 85 is on the outer side of the contact end 90 in the tire width direction, and the region on the outer side of the contact end 90 in the tire width direction is in contact with the road surface in the normal driving mode. Because the region to which the recesses 85 are provided is not in contact with the road surface in the normal driving mode, for example, at low load, the recesses 85 cause no influence and the maximum cornering force at low load can be assured. Accordingly, the driving stability at low load can be assured. In consequence, the rollover characteristics can be improved while the driving stability can be retained more reliably.

Because the rigidity of the block portion 83 in the vicinity of the shoulder 16 can be reduced because of the recess 85 formed in the lug groove 80 in the shoulder 16, the block portion 83 tends to deform when the block portion 83 is in contact with the road surface. Accordingly, a load applied to the tread surface 11 in the block portion 83 can be dispersed and received by the tread surface 11 and a too high contact pressure can be prevented. Hence, the wear resulting from a too high contact pressure in the vicinity of the shoulder 16 can be prevented. In consequence, the shoulder wear can be prevented.

Fig. 11 is a detailed view of a portion C shown in Fig. 9. It is preferable that the recess 85 is formed in the lug groove 80 in the shoulder 16 in a way that a depth H of the deepest portion of the recess 85 and an average D (=D1+D2/2) between groove depths D1 and D2 at both ends of the recess 85 in the tire width direction, in other words, in the groove-length direction of the lug groove 80, satisfy $0.20 \leq H/D \leq 0.50$. When $0.20 \leq H/D \leq 0.50$ is satisfied, the rigidity of the block portions 83 can be reduced and the thickness of the tread rubber 60 in the shoulder 16 can be assured as well. For example, when $H/D \leq 0.20$ is satisfied, there is a risk that the rigidity of the block portions 83 cannot be effectively reduced and thus it is difficult to obtain the effect of the improvement in the rollover characteristics resulting from the provision of the recess 85. Meanwhile, when $0.50 \leq H/D$ is satisfied, there is a risk that the thickness of the tread rubber 60 is insufficient in the shoulder 16 and thus the durability of the pneumatic tire 1 is decreased. For this reason, by forming the recess 85 in a way that the depth H of the deepest portion of the recess 85 and the average D between the groove depths D1 and D2 at both ends of the recess 85 satisfy $0.20 \leq H/D \leq 0.50$, the thickness of the tread rubber 60 in the shoulder 16 can be assured while the rigidity of the block portion 83 can be reduced. Hence, the rollover characteristics can be improved more reliably and the durability can be improved. The depth H of the deepest portion of the recess 85 is determined based on the groove bottom 81 of the lug groove 80, and the position of the deepest portion of the recess 85 is not particularly limited.

The recess 85 is preferably between the contact end 90 of the tread portion 10 and a limit contact end 91 (see Figs. 10 and 11). Accordingly, the driving stability and the durability can be both achieved. Specifically, when the recess 85 is on the inner side of the contact end 90 of the tread portion 10 in the tire width direction, there is the risk that the rigidity of the block portion 83 in the vicinity of the recess 85 decreases and thus the maximum cornering force at low load is reduced and thus the driving stability decreases. Meanwhile, when the recess 85 is on the outer side of the limit contact end 91 of the tread portion 10 in the tire width direction, there is a risk that the rigidity in the vicinity of the shoulder 16 is insufficient and thus the durability of the pneumatic tire 1 decreases. For this reason, both of the driving stability and the durability can be improved when the recess 85 is between the contact end 90 of the tread portion 10 and the limit contact end 91 of the tread portion 10.

The limit contact end 91 is a point that defines the distance from the center of the contact width of the pneumatic tire 1, the distance being 1.3 times that between the center and the contact end 90. The contact width of the tire is the maximum linear distance in the tire width direction of the face of the pneumatic tire 1 mounted on the regular rim to which the regular inner pressure is applied and then a regular load is applied, the pneumatic tire 1 keeping still and being perpendicular to a plate, and the face being in contact with the plate.

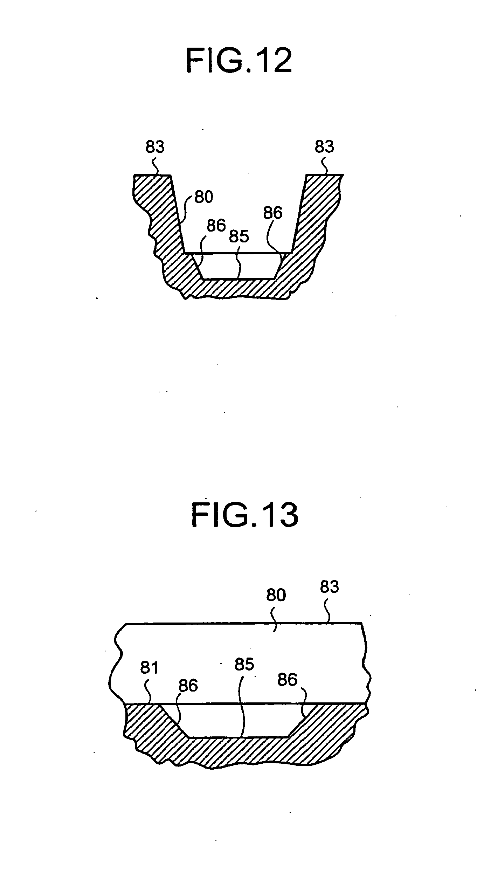

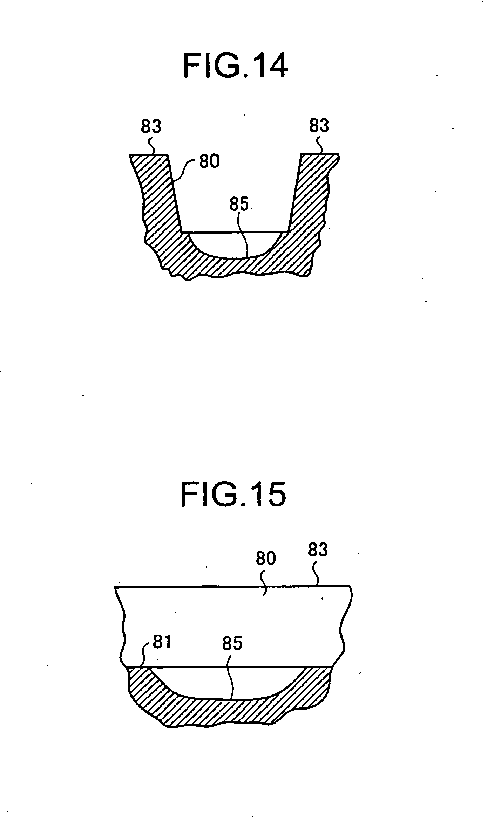

Fig. 12 is an explanatory view of the recess formed in a tapering shape, and is a cross sectional view along the line D-D in Fig. 10. Fig. 13 is an explanatory view of the recess formed in a tapering shape, and is a cross sectional view along the line E-E in Fig. 10. Fig. 14 is an explanatory view of the recess that forms a curved surface, and is a cross sectional view along the line D-D in Fig. 10. Fig. 15 is an explanatory view of the recess that forms a curved surface, and is a cross sectional view along the line E-E in Fig. 10. It is preferable the recess 85 is formed in the lug groove 80 in the shoulder 16 in a way that the opening area of the recess 85 gradually diminishes from the opening plane to the deepest portion of the recess 85. For example, as shown in Figs. 12 and 13, the recess 85 can be formed in a way that a sidewall 86 of the recess 85 forms a tapering shape and the opening area of the recess 85 gradually diminishes from the opening plane to the deepest portion of the recess 85. Alternatively, as shown in Figs. 14 and 15, the recess 85 can be formed in a way that the recess 85 forms a curved surface and the opening area of the recess 85 gradually diminishes from the opening plane to the deepest portion of the recess 85. Such formation makes it easier to form the recess 85 because a tire-forming mold can be easily removed from the recess 85 when the pneumatic tire 1 is formed.

The recesses 85 can be symmetrical or asymmetrical in the groove-length direction of the lug groove 80.

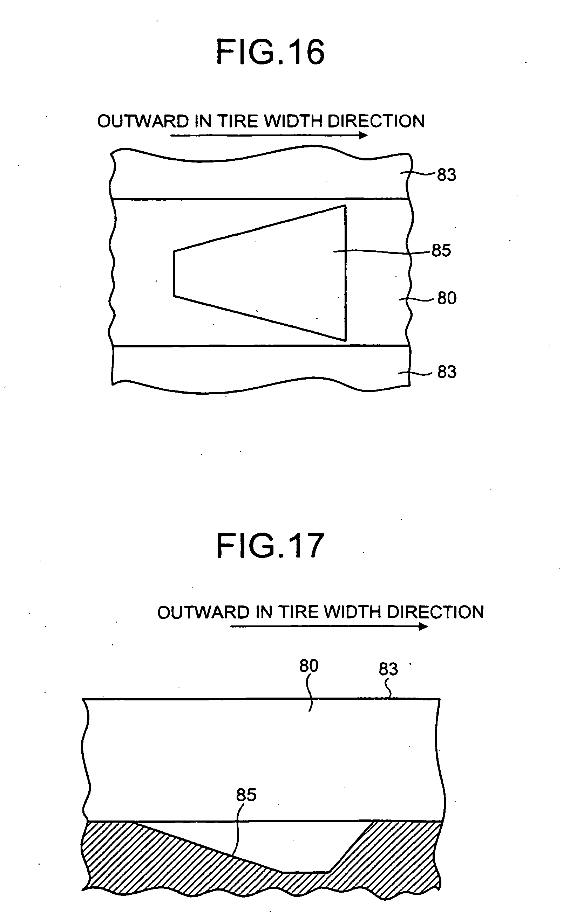

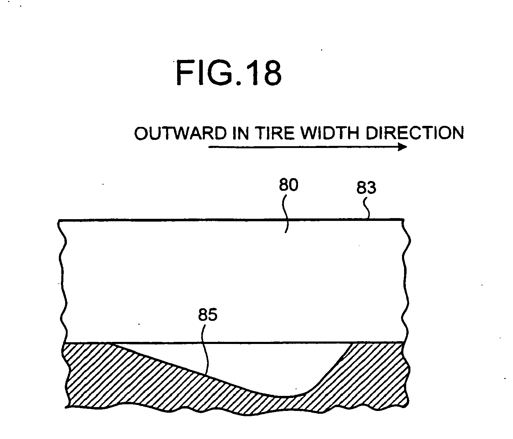

Fig. 16 is an explanatory view that depicts a modified example of the recess and is a cross sectional view along the line B-B of Fig. 9. Fig. 17 is an explanatory view that depicts a modified example of the recess, and is a cross sectional view along the line E-E of Fig. 10. Fig. 18 is an explanatory view that depicts a modified example of the recess, and is a cross sectional view along the line E-E of Fig. 10. Although the recess 85 is formed in the lug groove 80 in the shoulder 16 in a way that the recess 85 has a cross sectional area extending approximately in a certain range toward the tire-width-outward direction (see Fig. 11), the recess 85 can be formed in a different shape. Specifically, the recesses 85 can be formed in any form although the recess 85 forms the approximate rectangle along the groove width of the lug groove 80 in the plan view of the tread portion 10 and has the approximately uniform depth H.

For example, the recess 85 can be formed in a way that the cross-sectional area of the recess 85 gradually increases as it extends outwardly in the tire width direction. For example, as shown in Fig. 16, when looking from the top, the recess 85 can be formed in a way that the width of the recess 85 in the groove-width direction of the lug groove 80 at the end on the outer side in the tire width direction is larger than that on the inner side in the tire width direction and thus a substantial trapezoid is formed and that the opening width of the recess 85 gradually increases as it extends outwardly in the tire width direction. Alternatively, as shown in Figs. 17 and 18, the recess 85 can be formed in a way that the depth H of the recess 85 gradually increases as it extends outwardly in the tire width direction. By forming the recess 85 into any of the above shapes, the rigidity of the block portion 83 in the vicinity of the recess 85 can be gradually diminished as it extends outwardly in the tire width direction. Hence, the driving stability can be retained at a large slip angle, as compared with a structure in which the rigidity of the block portion 83 drops from the vicinity of the contact end 90. In consequence, the driving stability can be retained and the rollover characteristics can be improved as well.

The recess 85 can form a rectangle in a plan view of the tread portion 10 as described (see Fig. 10), or can form a circle or an ellipse (not shown). The shape of the recess 85 can be freely selected based on the shape of the lug groove 80 within the obvious scope of a person skilled in the art.

When the aspect ratio of the pneumatic tire 1 is 65% or smaller, the effect is increased. The pneumatic tire 1 having the aspect ratio of 65% or smaller has a higher rigidity to a load applied to the tread surface 11 in the tire width direction, and thus, the cornering force tends to be large at high load. For this reason, the pneumatic tire 1 having the aspect ratio of 65% or smaller tends to have lower rollover resistance. However, by designing the tread surface 11 of the pneumatic tire 1 to have the profile in the above-described shape, the rollover characteristics can be improved as while retaining the driving stability more effectively.

Although only the circumferential grooves 50 are provided in the tire circumferential direction as the grooves formed on the tread surface 11 of the pneumatic tire 1, any groove other than the circumferential grooves 50 can be formed. When grooves other than the circumferential grooves 50 are formed, it suffices that the tread surface 11 has the profile in the above-described shape. Even when the circumferential grooves 50 are formed, a different groove such as a groove extending in the tire width direction can be formed. In other words, although the pneumatic tire 1 has the tread pattern that is the rib pattern obtained providing only the circumferential grooves 50 to the tread surface 11, the pneumatic tire 1 can have any tread pattern such as the rib-lug pattern and the block pattern.

Examples

Evaluation tests of performance of the pneumatic tire 1, which were conducted on conventional pneumatic tires and the pneumatic tires 1 according to the present invention, are explained below. Seven performance evaluation tests were carried out. The two performance evaluation tests of them were carried out by conducting only the double lane change test, and the other five performance evaluation tests were carried out by conducting the double lane change test and running an actual vehicle in a test course.

The first test method from among the seven performance evaluation tests was carried out by conducting a test run with a sport utility vehicle (SUV) having 1800 cc of displacement fitted with the pneumatic tires 1 in the size of 225/65R17 that were mounted on the rims. As an evaluation method for the performance evaluation test, the double lane change test (elk test), which is defined in ISO 3888-2, was conducted with the vehicle described above, and the rollover characteristics were determined in accordance with whether wheels of the vehicle were lift-up. According to the determination, a case if the wheels were not lift-up was marked as successful, while the other case if the wheels were lift-up was marked as failure. If the determination was successful, it was determined that the rollover characteristics were good.

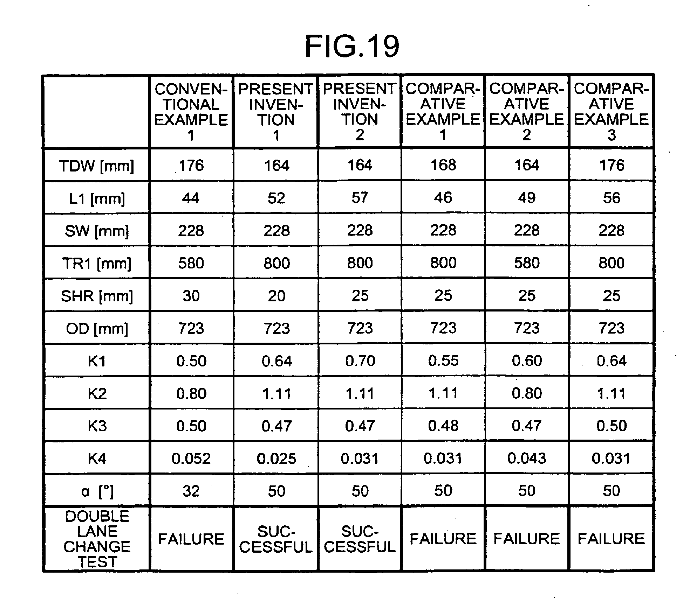

As the pneumatic tires 1 to be examined with the test, two models of tires according to the present invention, three models of tires as comparative examples to compare with the present invention, and one model of tires as a conventional example were tested by the first test method. The evaluation tests were conducted by the first test method on the pneumatic tires 1 according to a conventional example 1, comparative examples 1 to 3, and present inventions 1 and 2, and obtained results are shown in Fig. 19.

The pneumatic tires 1 on which the evaluation tests by the first test method were conducted were all capable to perform a double lane change in the double lane change test, so that all of them retained the driving stability. On the other hand, as stated in the results of the tests shown in Fig. 19, if K1, K2, K3, and K4 do not satisfy $(0.6 \leq K1 \leq 0.8)$, $(0.9 \leq K2 \leq 2.0)$, $(0.40 \leq K3 \leq 0.48)$, and $(0.025 \leq K4 \leq 0.035)$, respectively, the rollover characteristics cannot be improved effectively (comparative examples 1 to 3).

By contrast, according to the present inventions 1 and 2, K1, K2, K3, and K4 are configured to satisfy $(0.6 \leq K1 \leq 0.8)$, $(0.9 \leq K2 \leq 2.0)$, $(0.40 \leq K3 \leq 0.48)$, and $(0.025 \leq K4 \leq 0.035)$, respectively. Accordingly, the driving stability at low load, such as 40% of the maximum load, can be assured, and the maximum cornering force at high load, such as 70% to 100% of the maximum load, can be reduced, so that the rollover resistance at high load can be improved. Consequently, while retaining the driving stability, the rollover characteristics can be improved.

The second test method from among the seven performance evaluation tests was carried out by conducting a test run with a vehicle having 1300 cc of displacement fitted with the pneumatic tires 1 in the size of 185/60R15 that were mounted on the rims. As an evaluation method for the performance evaluation test, similarly to the performance evaluation test by the first test method, the double lane change test, which is defined in ISO 3888-2, was conducted with the vehicle fitted with the pneumatic tires 1, and the rollover characteristics were determined in accordance with whether wheels of the vehicle were lift-up. According to the determination, a case if the wheels were lift-up was marked as failure; a case if the wheels were not lift-up at a test speed of 60 km/h was marked as successful; and a case if the wheels were not lift-up at a test speed of 62 km/h was marked as more successful; so that when the determination was successful or more successful, it was determined that the rollover characteristics were good. Moreover, in the evaluation method, the case where the wheels that are not lift-up at a higher speed can be determined as better in the rollover characteristics. Therefore, it was determined that the case resulting in the determination more successful was better in the rollover characteristics than the case resulting in the determination successful.

In the performance evaluation test by the second test method, a test of the driving stability was also conducted. As a test method for the driving stability, the vehicle ran at 60 km/h to 100 km/h through a test course that had a flat round route, and three specialized panelists conducted sensory evaluations on steerage when changing a lane and cornering and stability when going straight. Evaluation results are indicated in indexes based on the evaluation result of the pneumatic tire 1 according to a conventional example 2 set at 100, where the larger index expresses the better driving stability. In the evaluation test of the driving stability, if the index is at 96 or higher, it is determined that the steerage when changing a lane and cornering and the stability when going straight are assured, so that the driving stability is retained.

As the pneumatic tires 1 to be examined with the tests, tires according to present inventions 3 to 9 as seven models according to the present invention, and tires according to the conventional example 2 and a conventional example 3 as two models of conventional examples were tested by the second test method. Among the tires, the tires according to the conventional examples 2 and 3 had a profile form of the tread surface 11 of the pneumatic tire 1 that was conventional and not designed to improve the rollover characteristics, i.e., a conventional form. The tires according to the present inventions 3 to 9 had a profile form of the tread surface 11 that was designed to improve the rollover characteristics as described above, i.e., a rollover-characteristic improved-form.

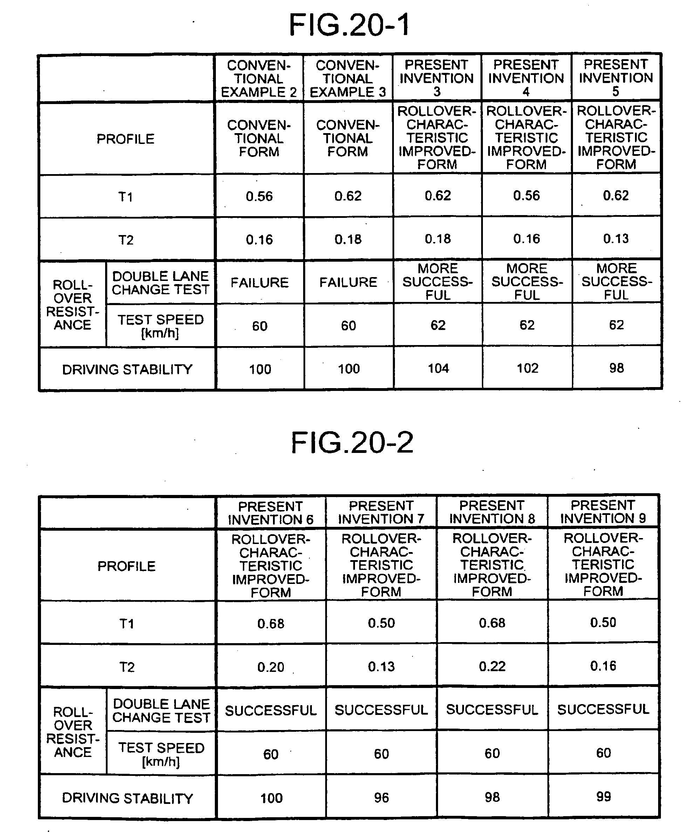

The evaluation tests were conducted on the pneumatic tires 1 according to the conventional example 2, the conventional example 3, and the present inventions 3 to 9, by the second test method. Obtained results are shown in Figs. 20-1 and 20-2. Among Figs. 20-1 and 20-2, Fig. 20-1 indicates results of the evaluation tests on the tires according to the conventional example 3, and the present inventions 3 to 5, while Fig. 20-2 indicates results of the evaluation tests on the tires according to the present inventions 6 to 9.

As stated in the test results shown in Figs. 20-1 and 20-2, the rollover resistance can be improved by designing the profile of the tread surface 11 to have the rollover-characteristic improved-form (the present inventions 3 to 9). Furthermore, the maximum cornering force at high load can be reduced by positioning the shoulder-side circumferential groove 51 appropriately in the tire width direction, so that the rollover resistance at high load can be improved. Moreover, an appropriate block rigidity in the vicinity of the center in the tire width direction can be achieved by positioning the equatorial-plane-side circumferential grooves 55 appropriately in the tire width direction. Accordingly, an appropriate response of the pneumatic tire 1 when cornering can be achieved, so that the driving stability can be assured more reliably. As a result, the rollover resistance can be improved while retaining the driving stability more reliably (the present inventions 3 to 5).

The third test method from among the seven performance evaluation tests was carried out, similarly to the second test method, by conducting a test run with a vehicle having 1300 cc of displacement fitted with the pneumatic tires 1 in the size of 185/60R15 that were mounted on the rims. As an evaluation method for the performance evaluation test, the performance evaluation tests of the rollover characteristics and the driving stability similarly to the second test method were carried out, and an evaluation test of braking performance was further conducted. Among the tests, results of the test of the driving stability are indicated in indexes based on the evaluation result of the pneumatic tire 1 according to a conventional example 6 set at 100, where the larger index expresses the better driving stability, and when the index is at 96 or higher, it is determined that the driving stability is retained.

In the evaluation test of the braking performance, stopping distances were measured by braking to a halt from 100 km/h on a dry road surface performed by the antilock brake system (ABS) five times with each model of the pneumatic tires 1 to be tested, and the average of the distances was taken as the stopping distance of the pneumatic tire 1 that was tested. Measurement results are indicated in indexes based on the stopping distance of the pneumatic tire 1 according to a conventional example 4 set at 100, where the larger index expresses the shorter stopping distance and the better braking performance.

As the pneumatic tires 1 to be examined with the tests, tires according to present inventions 10 to 17 as eight models according to the present invention, and tires according to the conventional example 4 and a conventional example 5 as two models of conventional examples were tested by the third test method. Among the tires, the tires according to the conventional examples 4 and 5 had the profile form of the tread surface 11 of the pneumatic tire 1 that was conventional and not designed to improve the rollover characteristics, i.e., the conventional form. By contrast, the tires according to the present inventions 10 to 17 had the profile form of the tread surface 11 that was designed to improve the rollover characteristics as described above, i.e., the rollover-characteristic improved-form. Moreover, on the pneumatic tires 1 to be tested, the cap tread 12 was formed from one of two kinds of rubber different in preparations of materials.

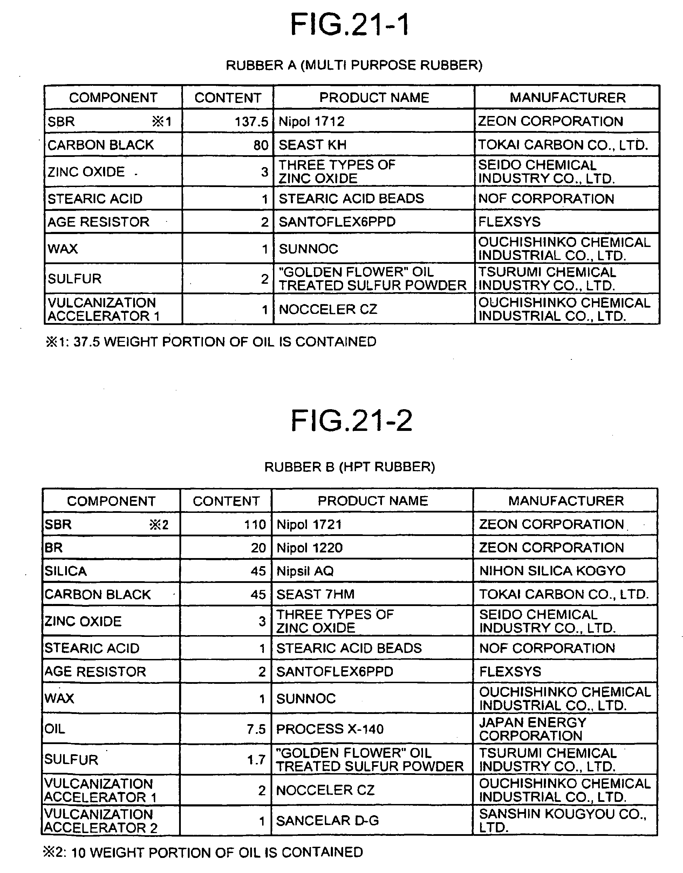

To describe more detail, the rubber that formed the cap tread 12 of the pneumatic tires 1 on which the evaluation tests were conducted by the third test method used either rubber A or rubber B, where the rubber A was multi purpose rubber that can be widely used for the cap tread 12, while the rubber B was high performance tire (HPT) rubber in which materials were prepared to obtain a higher grip performance than the rubber A. Compositions of raw materials for the rubber A and the rubber B (the proportion amount is a weight portion in a rubber weight portion 100) are shown in Figs. 21-1 and 21-2. In the figures, the compositions of the rubber A is shown in Fig. 21-1, while the compositions of the rubber B is shown in Fig. 21-2.

Each of the pneumatic tires 1 examined by the third test method had a different JIS-A hardness (JIS K6235) of the base rubber ply 61, and a different cross-sectional area ratio of the base rubber ply 61 to the tread rubber 60 (hereinafter, "the cross-sectional area ratio").

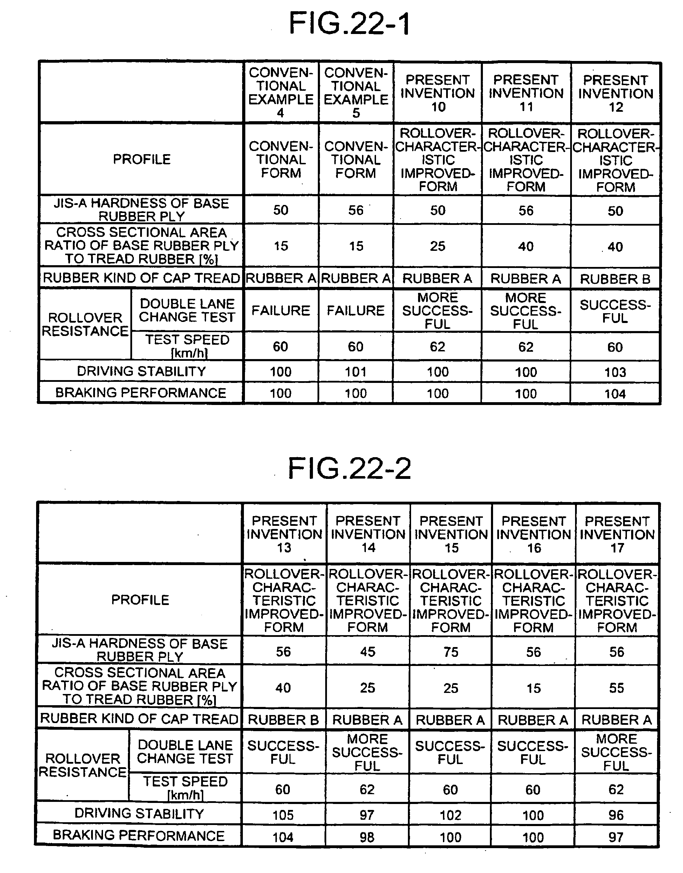

The evaluation tests were conducted by the third test method on pneumatic tires 1 according to the conventional examples 4 and 5 and the present inventions 10 to 17, and obtained results are shown in Figs. 22-1 and 22-2. Fig. 22-1 indicates results of the evaluation tests on the tires according to the conventional examples 4 and 5 and the present inventions 10 to 12, and Fig. 22-2 indicates results of the evaluation tests on the tires according to the present inventions 13 to 17.

As stated in the test results shown in Figs. 22-1 and 22-2, by designing the profile of the tread surface 11 to have the rollover-characteristic improved-form, the rollover resistance can be improved while retaining the driving stability (the present inventions 10 to 17). Furthermore, if the JIS-A hardness falls within the range from 48 to 60, the cross-sectional area ratio of the base rubber ply 61 to the tread rubber 60 falls within the range from 20% to 50%, and the cap tread 12 uses the rubber A, the rollover resistance can be improved more reliably (the present inventions 10 and 11). Moreover, if the JIS-A hardness falls within the range from 48 to 60, the cross-sectional area ratio of the base rubber ply 61 to the tread rubber 60 falls within the range from 20% to 50%, and the cap tread 12 uses the rubber B, the driving stability and the braking performance can be improved more reliably (the present inventions 12 and 13).

The fourth test method from among the seven performance evaluation tests was carried out, similarly to the second test method, by conducting a test run with a vehicle having 1300 cc of displacement fitted with the pneumatic tires 1 in the size of 185/60R15 that were mounted on the rims. As an evaluation method for the performance evaluation test, the performance evaluation tests of the rollover characteristics and the driving stability similarly to the second test method were carried out. Among the tests, results of the test of the driving stability are indicated in indexes based on the evaluation result of the pneumatic tire 1 according to the conventional example 6 set at 100, where the larger index expresses the better driving stability, and when the index is at 96 or higher, it is determined that the driving stability is retained.

As the pneumatic tires 1 to be examined with the tests, tires according to present inventions 18 to 24 as seven models according to the present invention, and tires according to the conventional example 6 and a conventional example 7 as two models of conventional examples were tested by the fourth test method. Among the tires, the tires according to the conventional examples 6 and 7 had the profile form of the tread surface 11 of the pneumatic tire 1 that was conventional and not designed to improve the rollover characteristics, i.e., the conventional form. By contrast, the tires according to the present inventions 18 to 24 had the profile form of the tread surface 11 that was designed to improve the rollover characteristics as described above, i.e., the rollover-characteristic improved-form.

Each of the pneumatic tires 1 examined by the fourth test method had a different filler height FH of the bead filler 26, a different JIS-A hardness (JIS K6235) Hs of the bead filler 26 at room temperature, and a different value G calculated in accordance with Equation (17).

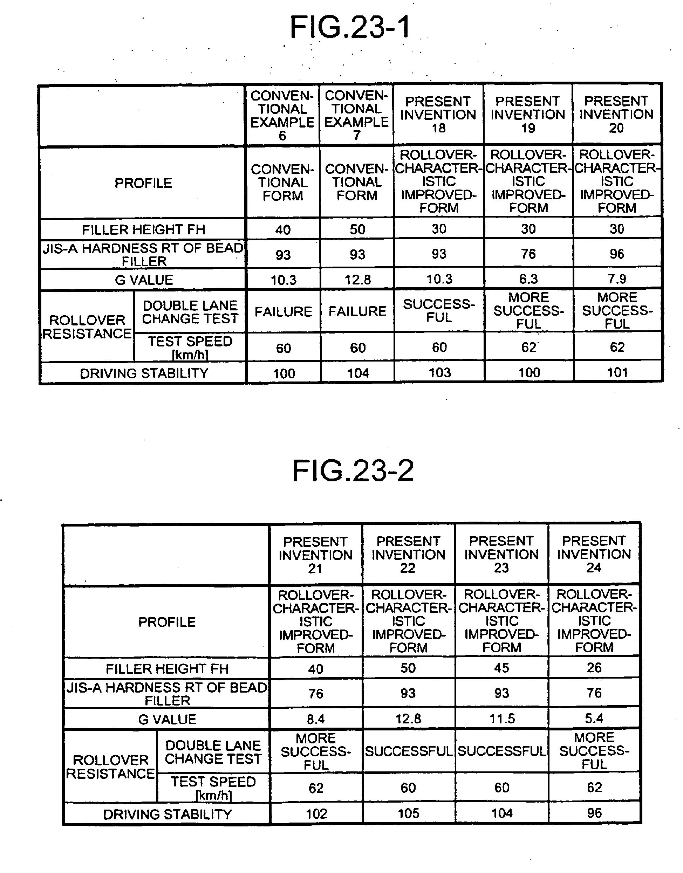

The evaluation tests were conducted by the fourth test method on pneumatic tires 1 according to the conventional examples 6 and 7 and the present inventions 18 to 24, and obtained results are shown in Figs. 23-1 and 23-2. Fig. 23-1 indicates results of the evaluation tests on the tires according to the conventional examples 6 and 7 and the present inventions 18 to 20, and Fig. 23-2 indicates results of the evaluation tests on the tires according to the present inventions 21 to 24.

As stated in the test results shown in Figs. 23-1 and 23-2, by designing the profile of the tread surface 11 to have the rollover-characteristic improved-form, the rollover resistance can be improved while retaining the driving stability (the present inventions 18 to 24). Furthermore, by forming the bead core such that Equation (17) G satisfies $6 \leq G \leq 11$, the rollover resistance can be improved while retaining the driving stability more reliably (the present inventions 18 to 21). Particularly, when the bead core is formed to make G satisfy $7 \leq G \leq 9$, the driving stability and the rollover resistance can be improved together (the present inventions 20 and 21).

The fifth test method from among the seven performance evaluation tests was carried out by conducting a test run with a sport utility vehicle (SUV) having 2400 cc of displacement, similarly to the first test method, fitted with the pneumatic tires 1 in the size of 225/65R17 that were mounted on the rims. As an evaluation method for the performance evaluation test, the evaluation test of the rollover resistance similarly to the first test method, and the evaluation test of the driving stability similarly to the second test method were conducted, and additionally an evaluation test of wear resistance was conducted. Among the tests, results of the test of the driving stability are indicated in indexes based on the evaluation result of the pneumatic tire 1 according to the conventional example 8 set at 100, where the larger index expresses the better driving stability, and when the index is at 96 or higher, it is determined that the driving stability is retained.

As a method for the evaluation test of the wear resistance, a wear amount of the shoulder 16 on the vehicle inner side in the tire width direction was measured. Evaluation results are indicated in index based on the measurement result of the tire according to a conventional example 8 set at 100, it is determined that the larger index expresses the better wear resistance.

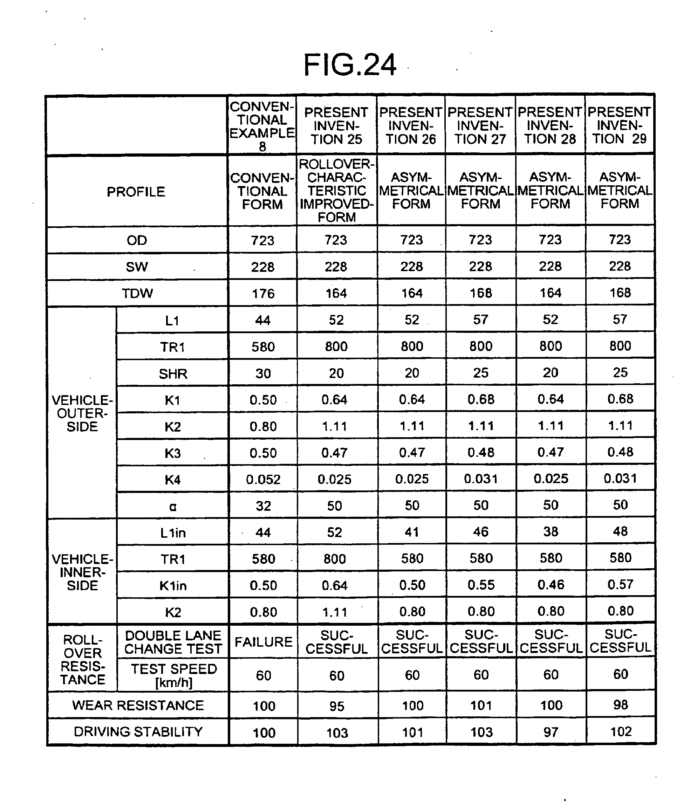

As the pneumatic tires 1 to be examined with the tests, tires according to present inventions 25 to 29 as five models according to the present invention, and tires according to the conventional example 8 as one model of a conventional example were tested by the fifth test method. Among the tires, according to the conventional examples 8, the profile form of the tread surface 11 of the pneumatic tire 1 was conventional and not designed to improve the rollover characteristics, i.e., the conventional form. According to the present invention 25, the profile form of the tread surface 11 was designed to improve the rollover characteristics as described above, i.e., the rollover-characteristic improved-form. According to the present inventions 26 to 29, the profile form of the tread surface 11 was asymmetrical in the tire width direction with respect to the equatorial plane 5, and the profile on the vehicle-outer-side in the tire width direction is in the rollover-characteristic improved-form. Furthermore, according to the present inventions 26 and 27, the profile on the vehicle inner side in the tire width direction is in a profile form that is designed to improve wear resistance rather than the rollover-characteristic improved-form. The evaluation tests were conducted on the pneumatic tires 1 according to the conventional example 8, and the present inventions 25 to 29 by the fifth test method, and obtained results are shown in Fig. 24.

As stated in the test results shown in Figs. 24, by designing the profile of the tread surface 11 at least on the vehicle-outer-side in the tire width direction to have the rollover-characteristic improved-form, the rollover resistance can be improved while retaining the driving stability (the present inventions 25 to 29). Furthermore, by designing the profile of the tread surface on the vehicle-inner-side in the tire width direction to have a form in which $K1_{in}$ obtained from Equation (18) satisfies $0.4 \leq K1_{in} \leq 0.6$, $K1_{in}$, the wear resistance can be improved (the present inventions 26 and 27).

The sixth test method from among the seven performance evaluation tests was carried out, similarly to the second test method, by conducting a test run with a vehicle having 1300 cc of displacement fitted with the pneumatic tires 1 in the size of 185/60R15 that were mounted on the rims. As an evaluation method for the performance evaluation test, the evaluation test of the rollover resistance similarly to the second test method was conducted.

As the pneumatic tires 1 to be examined with the test, tires according to present inventions 30 to 37 as eights models according to the present invention, and a tire according to a conventional example 9 as one model of a conventional example were tested by the sixth test method. Among the tires, according to the conventional example 9, the profile of the tread surface 11 had a conventional form. According to the present inventions 30 to 37, the profile of the tread surface 11 had the rollover-characteristic improved-form. According to the conventional example 9 and the present inventions 30 to 37, the belt ply 21 was provided with the belt cover ply 70 tire-radially outward. According to the present inventions 31 to 37, the belt cover ply 70 was designed to have a larger cover tensile-rigidity index Es in the shoulder region 72 than a cover tensile-rigidity index Ec in the central region 71.

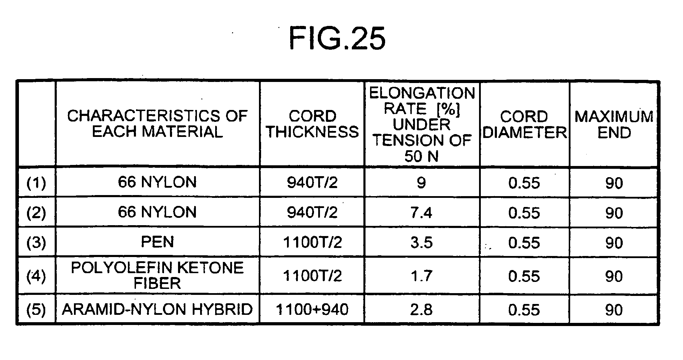

Specifically, the belt cover ply 70 provided on the pneumatic tire 1 subjected to the evaluation tests by the sixth test method uses any one of the reinforcing cords 75 from among five kinds that vary in materials of the reinforcing cord 75, cord thickness, and extensibility when extending with 50 N. Details of the reinforcing cords 75 are shown in Fig. 25.

In the pneumatic tiers 1 subjected to the evaluation tests by the sixth test method, by using one of the reinforcing cords 75 shown in Fig. 25 as the central-region reinforcing cord 76 or the shoulder-region reinforcing cord 77 in the belt cover ply 70, the cover tensile-rigidity index Es in the shoulder region 72 was designed to be larger than the cover tensile-rigidity index Ec in the central region 71.

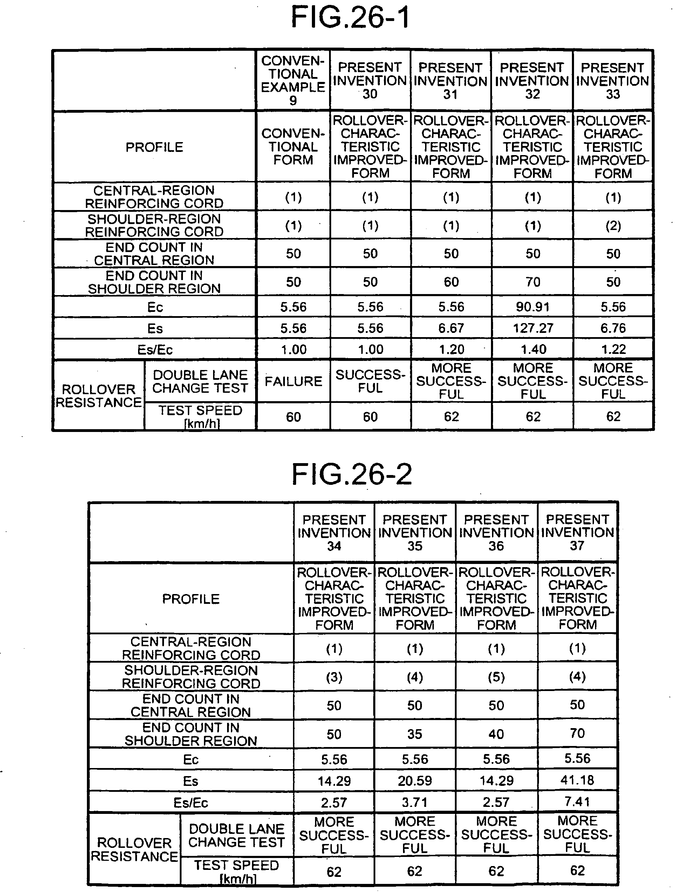

The evaluation tests were conducted by the sixth test method on the pneumatic tires 1 according to the conventional example 9, and the present inventions 30 to 37, and obtained results are shown in Figs. 26-1 and 26-2. Among Figs. 26-1 and 26-2, Fig. 26-1 indicates results of the evaluation tests on the tires according to the conventional example 9, and the present inventions 30 to 33, while Fig. 26-2 indicates results of the revaluation tests on the tires according to the present inventions 34 to 37.

As stated in the test results shown in Figs. 26-1 and 26-2, by designing the profile of the tread surface 11 to have the rollover-characteristic improved-form, the rollover resistance can be improved (the present inventions 30 to 37). Furthermore, by designing the belt cover ply 70 to have the cover tensile-rigidity index Es in the shoulder region 72 larger than the cover tensile-rigidity index Ec in the central region 71, the rollover resistance can be improved more reliably (the present inventions 31 to 37).

The seventh test method from among the seven performance evaluation tests was carried out by conducting a test run with a recreational vehicle (RV) having 2400 cc of displacement fitted with the pneumatic tires 1 in the size of 235/55R18 that were mounted on the rims. As an evaluation method for the performance evaluation test, the evaluation test of the rollover resistance similarly to the first test method, and the evaluation test of the driving stability similarly to the second test method were conducted, and additionally an endurance test and an evaluation test of shoulder wear were conducted. In the test of the driving stability, results are indicated in indexes based on the evaluation result of the pneumatic tire 1 according to a conventional example 10 set at 100, where the larger index expresses the better driving stability, and when the index is at 96 or higher, it is determined that the driving stability is retained.

The endurance test, which was a performance test of the durability, was carried out by conducting a low-pressure endurance test with an indoor drum test machine, and measuring the number of cracks that appeared adjacent to the shoulder 16 after running through a predetermined distance. Measurement results are indicated in indexes based on the measurement result of the pneumatic tire 1 according to the conventional example 10 in a pattern 1 set at 100, where it is determined that the larger index expresses the better durability.

As a method of the evaluation test of the shoulder wear, the remaining amount of the lug groove 80 on the shoulder 16 was each measured to compare measurement results. Measurement results are indicated in indexes based on a wear rate set at 100, at which the lug groove 80 on the shoulder 16 of the pneumatic tire 1 in a size to be tested is supposed to be normally worn completely by 40,000 km. If the index is larger, it is harder to wear the shoulder, therefore, it is determined that the performance against the shoulder wear is good.

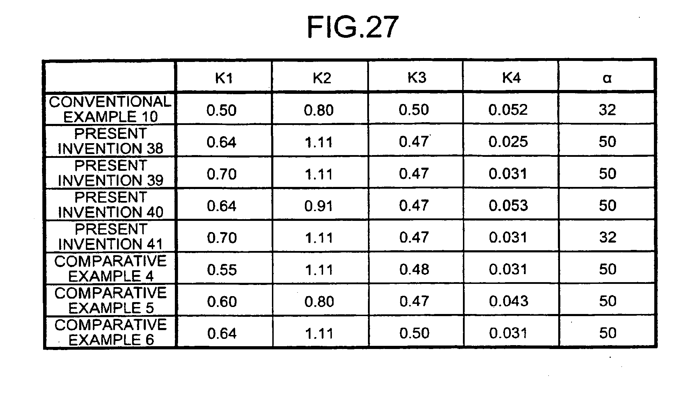

As the pneumatic tires 1 to be examined with the test, tires according to present inventions 38 to 41 as four models according to the present invention, and tires according to comparative examples 4 to 6 as three comparative examples, and a tire according to the conventional example 10 as one model of a conventional example were tested by the seventh test method. The tires according to the conventional example 10, the comparative examples 4 to 6, and the present inventions 38 to 41 were all different in the profile of the tread surface 11. More specifically, the pneumatic tires 1 subjected to the evaluation tests in accordance with the seventh test method, all have different profiles between the conventional example 10, the comparative example 4 to 6, and the present inventions 38 to 41, precisely, the evaluation tests were conducted on eight profiles. The profiles are different in K1, K2, K3, and K4, obtained from Equation (11), Equation (12), Equation (13), and Equation (14), respectively, and the angle $\alpha$. Details of the profiles of the pneumatic tires 1 subjected to the evaluation test by the seventh test method are shown in Fig. 27.

In the seventh test method, evaluation tests were conducted on each of the tires according to the conventional example 10, the present inventions 38 to 41, and the comparative examples 4 to 6 with five patterns of the shoulder 16, namely, patterns 1 to 5 were tested. The five patterns have a variety of forms of the recesses 85 provided in the lug groove 80 on the shoulder 16. In the pattern 1, the recess 85 is not arranged on the shoulder 16, by contrast, in the patterns 2 to 5, the recesses 85 are arranged in the lug groove 80 on the shoulder 16. In addition, the recess 85 on the shoulder 16 in each of the patterns 2 to 5 has a different depth.

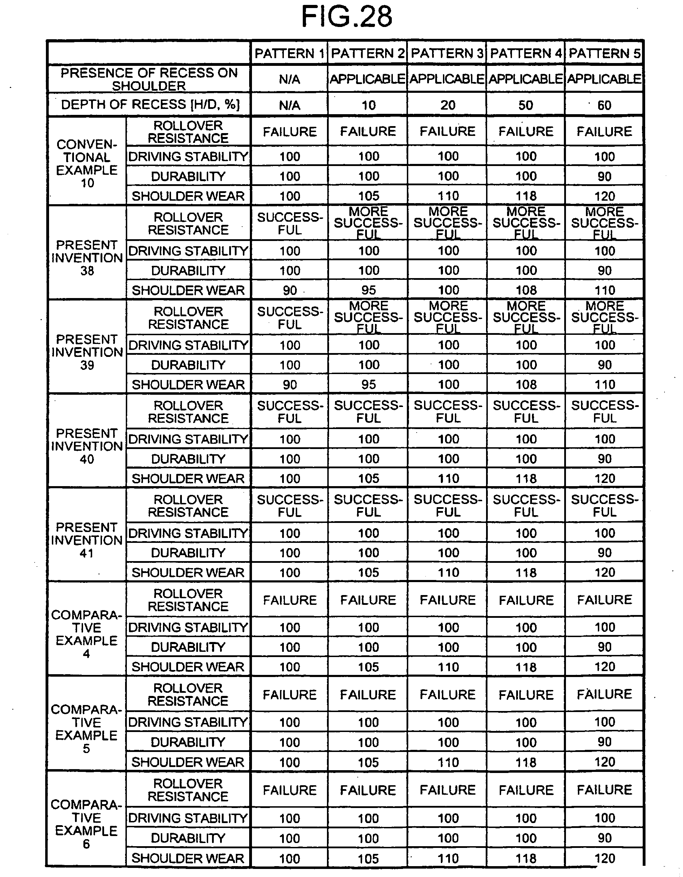

As the pneumatic tires 1 to be examined with the seventh test method, tests of the rollover resistance, the driving stability, the durability, and the shoulder wear were conducted on each of five patterns of the recess 85 provided on the shoulder 16. Evaluation tests were conducted in accordance with the seventh test method on the pneumatic tires 1 according to the conventional example 10, the present inventions 38 to 41, and the comparative examples 4 to 6, and obtained results are shown in Fig. 28.

As stated in the test results shown in Fig. 28, by designing the profile of the tread surface 11 to have the rollover-characteristic improved-form, and forming the recesses 85 on the shoulder 16, the rollover characteristics can be improved while retaining the driving stability more reliably. Furthermore, by providing the recesses 85 on the shoulder 16, the shoulder wear can be suppressed, as a result, performance against the shoulder wear can be improved.

INDUSTRIAL APPLICABILITY

As described above, embodiments of the pneumatic tire according to the present invention can be effective, where the tread surface in the meridian cross section is to be formed from a plurality of arcs. More particularly, embodiments of the pneumatic tire according to the present invention can be suitable, where the tread surface is to be formed from three arcs.

**Claims**

1. A pneumatic tire comprising:

   a sidewall portion (15) arranged on each edge of a tire width direction; and
   a tread portion (10) provided on an outer side of the sidewall portion (15) in a tire radial direction, the tread portion (10) including a cap tread (12), wherein
   a tread surface (11) that is a surface of the cap tread (12) in a meridian cross section of the pneumatic tire is formed with a plurality of arcs with different curvature radiuses,

   **characterised in that**:

   under a condition when the pneumatic tire is mounted on a proper rim, and filled with an internal pressure of 5% of a normal internal pressure, the tread surface (11) is formed from a center arc centered in the tire width direction, a shoulder-side arc positioned on a vehicle-outer-side at least from the center arc in the tire width direction, and a shoulder arc that forms a shoulder arranged at least a vehicle-outer-side end in the tire width direction of the tread surface (11),
   K1 satisfies $0.6 \leq K1 \leq 0.8$,
   K2 satisfies $0.9 \leq K2 \leq 2.0$, and
   K3 satisfies $0.40 \leq K3 \leq 0.48$,

   where K1 is defined by $K1=L1/(TDW \times 0.5)$, K2 is defined by $K2=TR1/OD$, K3 is defined by $K3=(\beta \times TDW)/(100 \times SW)$, TR1 is a curvature radius of the center arc, L1 is an outline area, which is a width from an equatorial plane to an end of the center arc in the tire width direction, TDW is a tread development width, which is a width of the tread surface (11) in the tire width direction, SW is a total width, which is a width in the tire width direction between outermost positions in the tire width direction of the sidewall portions (15) opposed as arranged at both edges of the tire width direction, OD is a tire outside diameter, which is a diameter of the pneumatic tire at a position at which a diameter of the tread surface (11) in a tire-radial direction is largest, and $\beta$ is an aspect ratio; and
   an angle $\alpha$ formed by a tangent in contact with the center arc and a tangent in contact with the shoulder arc satisfies $35° \leq \alpha \leq 60°$, the tangent in contact with the center-arc passing through an end in the tire width direction of the center-arc, and the tangent in contact with the shoulder-arc passing through an outer end in the tire width direction of the shoulder arc.

2. The pneumatic tire according to claim 1, wherein K4 satisfies $0.025 \leq K4 \leq 0.035$,
   where K4 is defined by $K4=SHR/TR1$, and SHR is a curvature radius of the shoulder arc.

3. The pneumatic tire according to claim 1 or 2, wherein at least a part of the cap tread (12) uses a compound of which a 300%-tensile modulus is 5 megapascal to 10 megapascal.

4. The pneumatic tire according to any one of claims 1 to 3, wherein at least a part of the cap tread (12) uses anisotropic rubber in which a modulus in the tire width direction is smaller than a modulus in tire circumferential direction.

5. The pneumatic tire according to any one of claims 1 to 4, wherein
   a plurality of circumferential grooves that are formed in a tire circumferential direction are further provided on the tread surface (11), and
   a shoulder-side circumferential groove from among the circumferential grooves that is a circumferential groove arranged most closely to the shoulder between the equatorial plane and the shoulder is provided at a position at which T1 satisfies $0.55 \leq T1 \leq 0.65$,
   where T1 is defined by $T1=H1/(TDW \times 0.5)$, and H1 is a distance from a groove-width center of the shoulder-side circumferential groove to the equatorial plane in the tire width direction.

**6.** The pneumatic tire according to claim 5, wherein an equatorial-plane-side circumferential groove from among the circumferential grooves that is a circumferential groove arranged most closely to the equatorial plane between the equatorial plane and the shoulder is provided at a position at which T2 satisfies $0.15 \leq T2 \leq 0.20$, where T2 is defined by T2=H2/(TDWx0.5), and H2 is a distance from a groove-width center of the equatorial-plane-side circumferential groove to the equatorial plane in the tire width direction.

**7.** The pneumatic tire according to any one of claims 1 to 6, wherein
the tread portion (10) is formed from tread rubber that includes at least the cap tread (12), and a base rubber ply that is arranged tire-radially inward from the cap tread (12),
the base rubber ply has JIS-A hardness between 48 and 60 at room temperature, and
a cross sectional area of the base rubber ply in the meridian cross section is within a range between 20% to 50% of a cross sectional area of the tread rubber.

**8.** The pneumatic tire according to any one of claims 1 to 7, wherein
a bead in which a bead core is arranged is provided tire-radially inward on the sidewall portion (15), and a bead filler is provided tire-radially outward from the bead core, and
G satisfies $6 \leq G \leq 11$,
where G is defined by G=(HsxFH)/(ODx$\beta$), Hs is a JIS-A hardness of the bead filler at room temperature, and FH is a filler height, which is a distance between an outward edge and a most distant point in the bead filler, the outward edge being a position tire-radially most outward of the bead filler in the meridian cross section.

**9.** The pneumatic tire according to any one of claims 1 to 8, wherein a relation between $K1_{in}$ and K1 satisfies $K1_{in} \leq K1x0.9$, where the outline area on the vehicle-outer-side in the tire width direction differs from that on the vehicle inner side in the tire width direction, the outline area L1 is the outline area on the vehicle-outer-side in the tire width direction, and the K1 is a relation between the outline area L1 on the vehicle-outer-side in the tire width direction, and the tread development width TDW, $L1_{in}$ is the outline area on the vehicle inner side in the tire width direction, and $K1_{in}$ is defined by $K1_{in}=L1_{in}/(TDWx0.5)$, which is a relation between the outline area $L1_{in}$ and the tread development width TDW.

**10.** The pneumatic tire according to claim 9, wherein the $K1_{in}$ satisfies $0.4 \leq K1_{in} \leq 0.6$.

**11.** The pneumatic tire according to any one of claims 1 to 10, wherein
a bracing ply is provided tire-radially inward from the tread portion (10), and a belt cover ply is provided tire-radially outward from the belt ply,
the belt cover ply includes a central region that contains a reinforcing cord and is centered in the tire width direction, and shoulder regions that are positioned on both sides of the central region in the tire width direction, and
a ratio of a cover tensile-rigidity index Ec in the center region to a cover tensile-rigidity index Es in the shoulder region satisfied 1.0<Es/Ec,
where the cover tensile-rigidity index Ec in the center region is defined by Ed=Dc/Sc, where Dc is number of reinforcing cords per 50 millimeters in a direction of arrangement of the reinforcing cord arranged in the center region, and Sc is an extension rate (%) of one of the reinforcing cords arranged in the center region when a load of 50 Newton is applied, the cover tensile-rigidity index Es in the shoulder region is defined by Es=Ds/Ss, where Ds is number of reinforcing cords per 50 millimeters in a direction of arrangement of the reinforcing cord arranged in the shoulder region, and Ss is an extension rate (%) of one of the reinforcing cords arranged in the shoulder region when a load of 50 Newton is applied.

**12.** The pneumatic tire according to any one of claims 1 to 11, wherein a lug groove is formed on the shoulder, and a recess is formed at a groove bottom of the lug groove outward from a contact end of the tread portion (10) in the tire width direction.

**13.** The pneumatic tire according to claim 12, wherein a depth H and an average D satisfy $0.20 \leq H/D \leq 0.50$,
where H is a depth of the recess at a deepest point, and D is an average of groove depths D1 and D2 of the lug groove at both ends of the recess in the tire width direction.

**14.** The pneumatic tire according to claim 12 and 13, wherein, in the recess, an opening area decreases from an opening of the recess toward a deepest point of the recess.

**15.** The pneumatic tire according to any one of claims 12 to 14, wherein the recess is arranged between a contact end and a limit contact end, when the limit contact end is set at a point distant 1.3 times of a distance from a center of contact width of the tread portion (10) to the contact end.

16. The pneumatic tire according to any one of claims 12 to 15, wherein, in the recess, a cross sectional area gradually increases as toward outward in the tire width direction.

**Patentansprüche**

1. Pneumatischer Reifen, der umfasst:

   einen Seitenwandabschnitt (15), der an jedem Rand einer Reifenbreitenrichtung angeordnet ist; und
   einen Laufflächenabschnitt (10), der in einer radialen Reifenrichtung auf einer äußeren Seite des Seitenwandabschnitts (15) vorgesehen ist, wobei der Laufflächenabschnitt (10) eine Laufflächenkrone (12) enthält, bei dem eine Laufflächenoberfläche (11), d.h. eine Oberfläche der Laufflächenkrone (12) in einem Meridianquerschnitt des pneumatischen Reifens, mit einer Mehrzahl von Bögen mit unterschiedlichen Krümmungsradien ausgebildet ist,

   **dadurch gekennzeichnet, dass**:

   unter einer Bedingung, wenn der pneumatische Reifen auf einer geeigneten Felge aufgezogen ist und mit einem Innendruck von 5% eines normalen Innendrucks gefüllt ist, die Laufflächenoberfläche (11) aus einem Zentrumsbogen, der in der Reifenbreitenrichtung zentral vorgesehen ist, einem Schulterseitenbogen, der auf einer Fahrzeugaußenseite wenigstens von dem Zentrumsbogen in der Reifenbreitenrichtung positioniert ist, und einem Schulterbogen, der eine Schulter ausbildet, die wenigstens an einem Fahrzeugaußenseitenende in der Reifenbreitenrichtung der Laufflächenoberfläche (11) vorgesehen ist, ausgebildet ist,
   K1, $0{,}6 \leq K1 \leq 0{,}8$ erfüllt,
   K2, $0{,}9 \leq K2 \leq 2{,}0$ erfüllt, und
   K3, $0{,}40 \leq K3 \leq 0{,}48$ erfüllt,

   wobei K1 durch K1=L1/(TDWx0,5) definiert ist, K2 durch K2=TR1/OD definiert ist, K3 durch K3=(βxTDW)/(100xSW) definiert ist, TR1 ein Krümmungsradius des Zentrumsbogens ist, L1 ein Konturbereich ist, der eine Breite von einer Äquatorebene zu einem Ende des Zentrumsbogens in der Reifenbreitenrichtung ist, TDW eine Laufflächenentwicklungsbreite ist, die eine Breite der Laufflächenoberfläche (11) in der Reifenbreitenrichtung ist, SW eine Gesamtbreite ist, die eine Breite in der Reifenbreitenrichtung zwischen äußersten Positionen in der Reifenbreitenrichtung der gegenüberliegenden Seitenwandabschnitte (15) ist, die an beiden Rändern der Reifenbreitenrichtung angeordnet sind, OD ein Reifenaußendurchmesser ist, der einen Durchmesser des pneumatischen Reifens an einer Position ist, an der ein Durchmesser der Laufflächenoberfläche (11) in der radialen Reifenrichtung am größten ist, und β ein Aspektverhältnis ist; und
   ein Winkel $\alpha$, der durch eine Tangente in Kontakt mit dem Zentrumsbogen und einer Tangente in Kontakt mit dem Schulterbogen ausgebildet wird, $35° \leq \alpha \leq 60°$ erfüllt,
   wobei die Tangente in Kontakt mit dem Zentrumsbogen durch ein Ende in der Reifenbreitenrichtung des Zentrumsbogens tritt, und die Tangente in Kontakt mit dem Schulterbogen durch ein Außenende in der Reifenbreitenrichtung des Schulterbogens tritt.

2. Pneumatischer Reifen nach Anspruch 1, bei dem K4,
   $0{,}025 \leq K4 \leq 0{,}035$ erfüllt,
   wobei K4 durch K4 = SHR/TR1 definiert ist und SHR ein Krümmungsradius des Schulterbogens ist.

3. Pneumatischer Reifen nach Anspruch 1 oder 2, bei dem wenigstens ein Teil der Laufflächenkrone (12) eine Komponente verwendet, bei der ein 300%-Zugmodul 5 MPa bis 10 MPa beträgt.

4. Pneumatischer Reifen nach einem der Ansprüche 1 bis 3, bei dem wenigstens ein Teil der Laufflächenkrone (12) ein anisotropes Gummi verwendet, bei dem ein Modul in der Reifenbreitenrichtung kleiner als ein Modul in der Reifenumfangsrichtung ist.

5. Pneumatischer Reifen nach einem der Ansprüche 1 bis 4, bei dem
   eine Mehrzahl von Umfangsnuten, die in einer Reifenumfangsrichtung ausgebildet sind, ferner auf der Laufflächenoberfläche (11) vorgesehen sind, und

eine schulterseitige Umfangsnut aus den Umfangsnuten, die eine Umfangsnut ist, die der Schulter am nächsten angeordnet ist, zwischen der Äquatorebene und der Schulter, an einer Position vorgesehen ist, an der T1, 0,55 ≤ T1 ≤ 0,65 erfüllt,

wobei T1 durch T1=H1/(TDWx0,5) definiert ist, und H1 ein Abstand von einem Zentrum der Nutenbreite der schulterseitigen Umfangsnut zur Äquatorebene in der Reifenbreitenrichtung ist.

6. Pneumatischer Reifen nach Anspruch 5, bei dem eine äquatorebenenseitige Umfangsnut aus den Umfangsnuten, die eine Umfangsnut ist, die am nächsten an der Äquatorebene vorgesehen ist, zwischen der Äquatorebene und der Schulter, an einer Position vorgesehen ist, an der T2, 0,15 ≤ T2 ≤ 0,20 erfüllt,

bei dem T2 durch T2=H2/(TDWx0,5) definiert ist und H2 ein Abstand von einem Zentrum der Nutenbreite der äquatorebenenseitigen Umfangsnut zur Äquatorebene in der Reifenbreitenrichtung ist.

7. Pneumatischer Reifen nach einem der Ansprüche 1 bis 6, bei dem

der Laufflächenabschnitt (10) aus einem Laufflächengummi, der wenigstens die Laufflächenkrone (12) umfasst, und einer Basisgummilage ausgebildet ist, die von der Laufflächenkrone (12) in radialer Reifenrichtung nach innen angeordnet ist,

die Basisgummilage eine JIS-A-Härte zwischen 48 und 60 bei Raumtemperatur aufweist, und

ein Querschnittsflächenbereich der Basisgummilage in dem Meridianquerschnitt sich in einem Bereich zwischen 20% bis 50% eines Querschnittsflächenbereichs des Laufflächengummis befindet.

8. Pneumatischer Reifen nach einem der Ansprüche 1 bis 7, bei dem

ein Wulstrand, in dem ein Wulstrandkern vorgesehen ist, auf dem Seitenwandabschnitt (15) in radialer Reifenrichtung nach innen vorgesehen ist und ein Wulstrandfüller von dem Wulstrandkern in radialer Reifenrichtung nach außen vorgesehen ist, und

G, 6 ≤ G ≤ 11 erfüllt,

wobei G durch G = (HsxFH)/(ODxβ) definiert ist, Hs eine JIS-A-Härte des Wulstrandfüllers bei Raumtemperatur ist und FH eine Füllerhöhe ist, die ein Abstand zwischen einem Außenrand und einem am weitesten entfernten Punkt in dem Wulstrandfüller ist, wobei der Außenrand eine Position am weitesten außerhalb des Wulstrandfüllers in dem Meridianquerschnitt in radialer Reifenrichtung ist.

9. Pneumatischer Reifen nach einem der Ansprüche 1 bis 8, bei dem eine Beziehung zwischen K1$_{in}$ und K1, K1$_{in}$ ≤ K1x0,9 genügt,

wobei der Konturbereich auf der Fahrzeugaußenseite in der Reifenbreitenrichtung sich von dem auf der Fahrzeuginnenseite in der Reifenbreitenrichtung unterscheidet, der Konturbereich L1 der Konturbereich auf der Fahrzeugaußenseite in der Reifenbreitenrichtung ist und K1 eine Beziehung zwischen dem Konturbereich L1 auf der Fahrzeugaußenseite in der Reifenbreitenrichtung und der Laufflächenentwicklungsbreite TDW ist, L1$_{in}$ der Konturbereich auf der Fahrzeuginnenseite in der Reifenbreitenrichtung ist, und K1$_{in}$ durch K1$_{in}$ = L1$_{in}$/(TDWx0,5) definiert ist, was eine Beziehung zwischen dem Konturbereich L1$_{in}$ und der Laufflächenentwicklungsbreite TDW ist.

10. Pneumatischer Reifen nach Anspruch 9, bei dem K1$_{in}$, 0,4 ≤ K1$_{in}$ ≤ 0,6 erfüllt.

11. Pneumatischer Reifen nach einem der Ansprüche 1 bis 10, bei dem

eine Versteifungslage von dem Laufflächenabschnitt (10) in radialer Reifenrichtung innen vorgesehen ist und eine Gürtelabdecklage bezüglich der Gürtellage in radialer Reifenrichtung außen vorgesehen ist,

wobei die Gürtelabdecklage einen Zentrumsbereich, der eine Verstärkungsschnur enthält und in der Reifenbreitenrichtung zentral angeordnet ist, und Schulterbereiche enthält, die auf beiden Seiten des Zentrumsbereichs in der Reifenbreitenrichtung positioniert sind, und

ein Verhältnis von einem Abdeckungszugfestigkeitsindex Ec in dem Zentrumsbereich und einem Abdeckungszugfestigkeitsindex Es in dem Schulterbereich 1,0 < Es/Ec erfüllt,

wobei der Abdeckungszugfestigkeitsindex Ec in dem Zentrumsbereich durch Ed = Dc/Sc definiert ist, wobei Dc die Anzahl von Schnüren pro 50 mm in einer Richtung der Anordnung der Verstärkungsschnur ist, die in dem Zentrumsbereich vorgesehen ist, und Sc eine Dehnrate (%) von einer der Verstärkungsschnüre ist, die in dem Zentrumsbereich angeordnet sind, wenn eine Last von 50 Newton angelegt wird, wobei der Abdeckungszugfestigkeitsindex Es in dem Schulterbereich durch Es = Ds/Ss definiert ist, wobei Ds die Zahl der Verstärkungsschnüre pro 50 mm in einer Richtung der Anordnung der Verstärkungsschnur ist, die in dem Schulterbereich anordnet ist, und Ss eine Dehnrate (%) von einer der Verstärkungsschnüre ist, die in dem Schulterbereich angeordnet sind, wenn eine Last von 50 Newton angelegt wird.

12. Pneumatischer Reifen nach einem der Ansprüche 1 bis 11, bei dem eine Blocknut auf der Schulter ausgebildet ist und eine Aussparung auf einem Nutboden der Blocknut außerhalb von einem Kontaktende des Laufflächenabschnitts (10) in der Reifenbreitenrichtung ausgebildet ist.

13. Pneumatischer Reifen nach Anspruch 12, bei dem eine Tiefe H und ein Durchschnitt D, 0,20 ≤ H/D ≤ 0,50 erfüllt, wobei H eine Tiefe der Aussparung an einem tiefsten Punkt ist und D ein Durchschnitt der Nutentiefen D1 und D2 der Blocknut an beiden Enden der Aussparung in der Reifenbreitenrichtung ist.

14. Pneumatischer Reifen nach Anspruch 12 und 13, bei dem in der Aussparung sich ein Öffnungsflächenbereich von einer Öffnung der Aussparung zu einem tiefsten Punkt der Aussparung verringert.

15. Pneumatischer Reifen nach einem der Ansprüche 12 bis 14, bei dem die Aussparung zwischen einem Kontaktende und einem Grenzkontaktende angeordnet ist, wenn das Grenzkontaktende an einem Punkt festgelegt ist, der um das 1,3-fache eines Abstands von einem Zentrum einer Kontaktbreite des Laufflächenabschnitts (10) zum Kontaktende beabstandet ist.

16. Pneumatischer Reifen nach einem der Ansprüche 12 bis 15, bei dem sich in der Aussparung ein Querschnittsflächenbereich allmählich in der Reifenbreitenrichtung nach außen vergrößert.

**Revendications**

1. Pneumatique comprenant:

une partie latérale (15) agencée sur chaque bord d'une direction de largeur du pneu; et
une partie de bande de roulement (10) pourvue sur un côté externe de la partie latérale (15) dans une direction radiale du pneu, la partie de bande de roulement (10) incluant une bande supérieure (12), où
une surface (11) de la bande de roulement qui est une surface de la bande supérieure (12) dans une section transversale méridienne du pneumatique est formée d'une pluralité d'arcs avec différents rayons de courbures,

**caractérisé en ce que**:

dans le cas où le pneumatique est monté sur une jante adéquate, et chargé avec une pression interne de 5% d'une pression interne normale, la surface (11) de la bande de roulement est formée à partir d'un arc central centré dans la direction de largeur du pneu, un arc côté épaulement positionné sur un côté externe du véhicule au moins depuis l'arc central dans la direction de largeur du pneu, et un arc d'épaulement qui forme un épaulement agencé au moins à une extrémité du côté externe du véhicule dans la direction de largeur du pneu de la surface (11) de la bande de roulement,
K1 satisfait 0,6 ≤ K1 ≤ 0,8,
K2 satisfait 0,9 ≤ K2 ≤ 2,0, et
K3 satisfait 0,40 ≤ K3 ≤ 0,48,

où K1 est défini par K1=L1/ (TDWx0,5), K2 est défini par K2=TR1/OD, K3 est défini par K3=(βxTDW)/(100xSW), TR1 est un rayon de courbure de l'arc central, L1 est une zone de délimitation, qui est une largeur allant d'un plan équatorial vers une extrémité de l'arc central dans la direction de largeur du pneu, TDW est une largeur de développement de la bande de roulement, qui est une largeur de la surface (11) de la bande de roulement dans la direction de largeur du pneu, SW est une largeur totale, qui est une largeur dans la direction de largeur du pneu entre les positions la plus vers l'extérieur dans la direction de largeur du pneu des parties latérales (15) opposées telles qu'agencées aux deux bords de la direction de largeur du pneu, OD est un diamètre externe du pneu, qui est un diamètre du pneumatique dans une position dans laquelle un diamètre de la surface (11) de la bande de roulement dans une direction radiale du pneu est la plus large, et β est un rapport d'aspect; et
un angle α formé par une tangente en contact avec l'arc central et une tangente en contact avec l'arc d'épaulement satisfait 35° ≤ α ≤ 60°, la tangente en contact avec l'arc central passant à travers une extrémité dans la direction de largeur du pneu de l'arc central, et la tangente en contact avec l'arc d'épaulement passant à travers une extrémité externe dans la direction de largeur du pneu de l'arc d'épaulement.

**2.** Pneumatique selon la revendication 1, dans lequel K4 satisfait $0{,}025 \leq K4 \leq 0{,}035$,
où K4 est défini par K4=SHR/TR1, et SHR est un rayon de courbure de l'arc d'épaulement.

**3.** Pneumatique selon la revendication 1 ou 2, dans lequel au moins une partie de la bande supérieure (12) utilise un composé dont un module de traction à 300% est de 5 méga-pascal à 10 méga-pascal.

**4.** Pneumatique selon l'une quelconque des revendications 1 à 3, dans lequel au moins une partie de la bande supérieure (12) utilise un caoutchouc anisotrope dans lequel un module dans la direction de largeur du pneu est plus petit qu'un module dans la direction circonférentielle du pneu.

**5.** Pneumatique selon l'une quelconque des revendications 1 à 4, dans lequel
une pluralité de rainures circonférentielles qui sont formées dans une direction circonférentielle du pneu sont pourvues en plus sur la surface (11) de la bande de roulement, et
une rainure circonférentielle côté épaulement parmi les rainures circonférentielles qui est une rainure circonférentielle agencée de la manière à être la plus proche de l'épaulement entre le plan équatorial et l'épaulement, est pourvue à une position à laquelle T1 satisfait $0{,}55 \leq T1 \leq 0{,}65$,
où T1 est défini par T1= H1/ (TDWx0,5), et H1 est une distance allant d'un centre de largeur de la rainure de la rainure circonférentielle côté épaulement vers le plan équatorial dans la direction de largeur du pneu.

**6.** Pneumatique selon la revendication 5, dans lequel une rainure circonférentielle côté plan équatorial parmi les rainures circonférentielles, qui est une rainure circonférentielle agencée de la manière à être la plus proche du plan équatorial entre le plan équatorial et l'épaulement, est pourvue à une position à laquelle T2 satisfait $0{,}15 \leq T2 \leq 0{,}20$,
où T2 est défini par T2=H2/ (TDW x 0,5), et H2 est une distance allant d'un centre de largeur de rainure de la rainure circonférentielle côté plan équatorial vers un plan équatorial dans la direction de largeur du pneu.

**7.** Pneumatique selon l'une quelconque des revendications 1 à 6, dans lequel
la partie (10) de la bande de roulement est formée d'un caoutchouc de bande de roulement qui inclut au moins la bande supérieure (12), et un pli de base en caoutchouc qui est agencé vers l'intérieur radialement au pneu depuis la bande supérieure (12),
le pli de base en caoutchouc a une dureté JIS-A entre 48 et 60 à la température ambiante, et
une superficie en section transversale du pli de base en caoutchouc dans la section transversale méridienne se trouve dans une gamme allant de 20% à 50% d'une superficie en section transversale du caoutchouc de la bande de roulement.

**8.** Pneumatique selon l'une quelconque des revendications 1 à 7, dans lequel
un talon dans lequel une tringle est agencée, est fourni à l'intérieur radialement au pneu sur la partie latérale (15), et un bourrage sur tringle est fourni à l'extérieur radialement au pneu depuis la tringle, et
G satisfait $6 \leq G \leq 11$,
où G est défini par G = (HSxFH)/(ODx$\beta$), Hs est une dureté JIS-A du bourrage sur tringle à la température ambiante, et FH est une hauteur du bourrage sur tringle, qui est une distance entre un bord externe et le point le plus éloigné dans le bourrage sur tringle, le bord externe étant une position le plus vers l'extérieur radialement au pneu du bourrage sur tringle dans la section transversale méridienne.

**9.** Pneumatique selon l'une quelconque des revendications 1 à 8, dans lequel une relation entre $K1_{interne}$ et K1 satisfait $K1_{interne} \leq K1 \times 0{,}9$,
où la zone de délimitation sur le côté externe du véhicule dans la direction de largeur du pneu diffère de celle sur le côté interne du véhicule dans la direction de largeur du pneu, la zone de délimitation L1 est la zone de délimitation sur le côté externe du véhicule dans la direction de largeur du pneu, et le K1 est une relation entre la zone de délimitation L1 sur le côté externe du véhicule dans la direction de largeur du pneu, et la largeur de développement de la bande de roulement TDW, $L1_{interne}$ est la zone de délimitation sur le côté interne du véhicule dans la direction de largeur du pneu, et $K1_{interne}$ est défini par $K1_{interne}=L1_{interne}/$ (TDWx0,5), qui est une relation entre la zone de délimitation $L1_{interne}$ et la largeur de développement de la bande de roulement TDW.

**10.** Pneumatique selon la revendication 9, dans lequel le $K1_{interne}$ satisfait $0{,}4 \leq K1_{interne} \leq 0{,}6$.

**11.** Pneumatique selon l'une quelconque des revendications 1 à 10, dans lequel
une ceinture est fournie à l'intérieur radialement au pneu depuis la partie de la bande de roulement (10), et un pli d'enveloppe de la ceinture est fourni à l'extérieur radialement au pneu depuis le pli de ceinture,

le pli d'enveloppe de la ceinture inclut une région centrale qui contient un câble de renforcement et est centrée dans la direction de largeur du pneu, et des régions d'épaulement qui sont positionnées sur les deux côtés de la région centrale dans la direction de largeur du pneu, et

un rapport d'un indice de la rigidité de traction de l'enveloppe Ec dans la région centrale par rapport à un indice de la rigidité de traction de l'enveloppe Es dans la région d'épaulement a satisfait 1,0 <Es/Ec,

où l'indice de la rigidité de traction de l'enveloppe Ec dans la région centrale est défini par Ed=Dc/Sc, où DC est le nombre des câbles de renforcement par 50 millimètres dans une direction d'agencement du câble de renforcement agencé dans la région centrale, et Sc est un taux d'extension (%) de l'un des câbles de renforcement agencés dans la région centrale lorsqu'une charge de 50 Newtons est appliquée, l'indice de la rigidité de traction de l'enveloppe Es dans la région d'épaulement est définie par Es=Ds/Ss, où Ds est le nombre des câbles de renforcement par 50 millimètres dans une direction d'agencement du câble de renforcement agencé dans la direction d'épaulement, et Ss est un taux d'extension (%) de l'un des câbles de renforcement agencés dans la région d'épaulement lorsqu'une charge de 50 Newton est appliquée.

12. Pneumatique selon l'une quelconque des revendications 1 à 11, dans lequel une rainure du pavé est formée sur l'épaulement, et une cavité est formée au fond de la rainure du pavé à l'extérieur en partant d'une extrémité de contact de la partie de bande de roulement (10) dans la direction de largeur du pneu.

13. Pneumatique selon la revendication 12, dans lequel une profondeur H et une moyenne D satisfont $0,20 \leq H/D \leq 0,50$, où H est une profondeur de la cavité au point le plus profond, et D est une moyenne des profondeurs de rainure D1 et D2 de la rainure du pavé aux deux extrémités de la cavité de la direction de largeur du pneu.

14. Pneumatique selon la revendication 12 et 13, dans lequel, dans la cavité, une zone d'ouverture diminue depuis une ouverture de la cavité vers le point le plus profond de la cavité.

15. Pneumatique selon l'une quelconque des revendications 12 à 14, dans lequel la cavité est agencée entre une extrémité de contact et une extrémité de contact limite, lorsque l'extrémité de contact limite est établie à un point éloigné de 1,3 fois une distance allant d'un centre de la largeur de contact de la partie (10) de bande de roulement vers l'extrémité de contact.

16. Pneumatique selon l'une quelconque des revendications 12 à 15, dans lequel, dans la cavité, une superficie en section transversale augmente graduellement comme vers l'extérieur dans la direction de largeur du pneu.

# FIG.1

# FIG.2

# FIG.3

# FIG.4

# FIG.5

# FIG.6

# FIG.7

# FIG.8

# FIG.9

EP 1 892 126 B1

# FIG.10

90  91

D

E  E

D

83  50  83  80  85

# FIG.11

1

80
11  83  81  90
50  85
D1  16  91
H
D2  60
21
22  23

# FIG.12

# FIG.13

# FIG.14

# FIG.15

# FIG.16

OUTWARD IN TIRE WIDTH DIRECTION

83

85

80

83

# FIG.17

OUTWARD IN TIRE WIDTH DIRECTION

80    83

85

# FIG.18

OUTWARD IN TIRE WIDTH DIRECTION →

80  83

85

## FIG.19

| | CONVEN-TIONAL EXAMPLE 1 | PRESENT INVEN-TION 1 | PRESENT INVEN-TION 2 | COMPAR-ATIVE EXAMPLE 1 | COMPAR-ATIVE EXAMPLE 2 | COMPAR-ATIVE EXAMPLE 3 |
|---|---|---|---|---|---|---|
| TDW [mm] | 176 | 164 | 164 | 168 | 164 | 176 |
| L1 [mm] | 44 | 52 | 57 | 46 | 49 | 56 |
| SW [mm] | 228 | 228 | 228 | 228 | 228 | 228 |
| TR1 [mm] | 580 | 800 | 800 | 800 | 580 | 800 |
| SHR [mm] | 30 | 20 | 25 | 25 | 25 | 25 |
| OD [mm] | 723 | 723 | 723 | 723 | 723 | 723 |
| K1 | 0.50 | 0.64 | 0.70 | 0.55 | 0.60 | 0.64 |
| K2 | 0.80 | 1.11 | 1.11 | 1.11 | 0.80 | 1.11 |
| K3 | 0.50 | 0.47 | 0.47 | 0.48 | 0.47 | 0.50 |
| K4 | 0.052 | 0.025 | 0.031 | 0.031 | 0.043 | 0.031 |
| α [°] | 32 | 50 | 50 | 50 | 50 | 50 |
| DOUBLE LANE CHANGE TEST | FAILURE | SUC-CESSFUL | SUC-CESSFUL | FAILURE | FAILURE | FAILURE |

## FIG.20-1

|  |  | CONVEN-TIONAL EXAMPLE 2 | CONVEN-TIONAL EXAMPLE 3 | PRESENT INVENTION 3 | PRESENT INVENTION 4 | PRESENT INVENTION 5 |
|---|---|---|---|---|---|---|
| PROFILE |  | CONVEN-TIONAL FORM | CONVEN-TIONAL FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM |
| T1 |  | 0.56 | 0.62 | 0.62 | 0.56 | 0.62 |
| T2 |  | 0.16 | 0.18 | 0.18 | 0.16 | 0.13 |
| ROLL-OVER RESIST-ANCE | DOUBLE LANE CHANGE TEST | FAILURE | FAILURE | MORE SUCCESS-FUL | MORE SUCCESS-FUL | MORE SUCCESS-FUL |
|  | TEST SPEED [km/h] | 60 | 60 | 62 | 62 | 62 |
| DRIVING STABILITY |  | 100 | 100 | 104 | 102 | 98 |

## FIG.20-2

|  |  | PRESENT INVENTION 6 | PRESENT INVENTION 7 | PRESENT INVENTION 8 | PRESENT INVENTION 9 |
|---|---|---|---|---|---|
| PROFILE |  | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM |
| T1 |  | 0.68 | 0.50 | 0.68 | 0.50 |
| T2 |  | 0.20 | 0.13 | 0.22 | 0.16 |
| ROLL-OVER RESIST-ANCE | DOUBLE LANE CHANGE TEST | SUCCESSFUL | SUCCESSFUL | SUCCESSFUL | SUCCESSFUL |
|  | TEST SPEED [km/h] | 60 | 60 | 60 | 60 |
| DRIVING STABILITY |  | 100 | 96 | 98 | 99 |

# FIG.21-1

RUBBER A (MULTI PURPOSE RUBBER)

| COMPONENT | CONTENT | PRODUCT NAME | MANUFACTURER |
|---|---|---|---|
| SBR ※1 | 137.5 | Nipol 1712 | ZEON CORPORATION |
| CARBON BLACK | 80 | SEAST KH | TOKAI CARBON CO., LTD. |
| ZINC OXIDE . | 3 | THREE TYPES OF ZINC OXIDE | SEIDO CHEMICAL INDUSTRY CO., LTD. |
| STEARIC ACID | 1 | STEARIC ACID BEADS | NOF CORPORATION |
| AGE RESISTOR | 2 | SANTOFLEX6PPD | FLEXSYS |
| WAX | 1 | SUNNOC | OUCHISHINKO CHEMICAL INDUSTRIAL CO., LTD. |
| SULFUR | 2 | "GOLDEN FLOWER" OIL TREATED SULFUR POWDER | TSURUMI CHEMICAL INDUSTRY CO., LTD. |
| VULCANIZATION ACCELERATOR 1 | 1 | NOCCELER CZ | OUCHISHINKO CHEMICAL INDUSTRIAL CO., LTD. |

※1: 37.5 WEIGHT PORTION OF OIL IS CONTAINED

# FIG.21-2

RUBBER B (HPT RUBBER)

| COMPONENT | CONTENT | PRODUCT NAME | MANUFACTURER |
|---|---|---|---|
| SBR ※2 | 110 | Nipol 1721 | ZEON CORPORATION |
| BR | 20 | Nipol 1220 | ZEON CORPORATION |
| SILICA | 45 | Nipsil AQ | NIHON SILICA KOGYO |
| CARBON BLACK | 45 | SEAST 7HM | TOKAI CARBON CO., LTD. |
| ZINC OXIDE | 3 | THREE TYPES OF ZINC OXIDE | SEIDO CHEMICAL INDUSTRY CO., LTD. |
| STEARIC ACID | 1 | STEARIC ACID BEADS | NOF CORPORATION |
| AGE RESISTOR | 2 | SANTOFLEX6PPD | FLEXSYS |
| WAX | 1 | SUNNOC | OUCHISHINKO CHEMICAL INDUSTRIAL CO., LTD. |
| OIL | 7.5 | PROCESS X-140 | JAPAN ENERGY CORPORATION |
| SULFUR | 1.7 | "GOLDEN FLOWER" OIL TREATED SULFUR POWDER | TSURUMI CHEMICAL INDUSTRY CO., LTD. |
| VULCANIZATION ACCELERATOR 1 | 2 | NOCCELER CZ | OUCHISHINKO CHEMICAL INDUSTRIAL CO., LTD. |
| VULCANIZATION ACCELERATOR 2 | 1 | SANCELAR D-G | SANSHIN KOUGYOU CO., LTD. |

※2: 10 WEIGHT PORTION OF OIL IS CONTAINED

# FIG.22-1

| | | CONVEN-TIONAL EXAMPLE 4 | CONVEN-TIONAL EXAMPLE 5 | PRESENT INVENTION 10 | PRESENT INVENTION 11 | PRESENT INVENTION 12 |
|---|---|---|---|---|---|---|
| PROFILE | | CONVEN-TIONAL FORM | CONVEN-TIONAL FORM | ROLLOVER-CHARACTER-ISTIC IMPROVED-FORM | ROLLOVER-CHARACTER-ISTIC IMPROVED-FORM | ROLLOVER-CHARACTER-ISTIC IMPROVED-FORM |
| JIS-A HARDNESS OF BASE RUBBER PLY | | 50 | 56 | 50 | 56 | 50 |
| CROSS SECTIONAL AREA RATIO OF BASE RUBBER PLY TO TREAD RUBBER [%] | | 15 | 15 | 25 | 40 | 40 |
| RUBBER KIND OF CAP TREAD | | RUBBER A | RUBBER A | RUBBER A | RUBBER A | RUBBER B |
| ROLLOVER RESISTANCE | DOUBLE LANE CHANGE TEST | FAILURE | FAILURE | MORE SUCCESS-FUL | MORE SUCCESS-FUL | SUCCESS-FUL |
| | TEST SPEED [km/h] | 60 | 60 | 62 | 62 | 60 |
| DRIVING STABILITY | | 100 | 101 | 100 | 100 | 103 |
| BRAKING PERFORMANCE | | 100 | 100 | 100 | 100 | 104 |

# FIG.22-2

| | | PRESENT INVENTION 13 | PRESENT INVENTION 14 | PRESENT INVENTION 15 | PRESENT INVENTION 16 | PRESENT INVENTION 17 |
|---|---|---|---|---|---|---|
| PROFILE | | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM |
| JIS-A HARDNESS OF BASE RUBBER PLY | | 56 | 45 | 75 | 56 | 56 |
| CROSS SECTIONAL AREA RATIO OF BASE RUBBER PLY TO TREAD RUBBER [%] | | 40 | 25 | 25 | 15 | 55 |
| RUBBER KIND OF CAP TREAD | | RUBBER B | RUBBER A | RUBBER A | RUBBER A | RUBBER A |
| ROLLOVER RESISTANCE | DOUBLE LANE CHANGE TEST | SUCCESS-FUL | MORE SUCCESS-FUL | SUCCESS-FUL | SUCCESS-FUL | MORE SUCCESS-FUL |
| | TEST SPEED [km/h] | 60 | 62 | 60 | 60 | 62 |
| DRIVING STABILITY | | 105 | 97 | 102 | 100 | 96 |
| BRAKING PERFORMANCE | | 104 | 98 | 100 | 100 | 97 |

# FIG.23-1

|  |  | CONVEN-TIONAL EXAMPLE 6 | CONVEN-TIONAL EXAMPLE 7 | PRESENT INVENTION 18 | PRESENT INVENTION 19 | PRESENT INVENTION 20 |
|---|---|---|---|---|---|---|
| PROFILE |  | CONVEN-TIONAL FORM | CONVEN-TIONAL FORM | ROLLOVER-CHARACTER-ISTIC IMPROVED-FORM | ROLLOVER-CHARACTER-ISTIC IMPROVED-FORM | ROLLOVER-CHARACTER-ISTIC IMPROVED-FORM |
| FILLER HEIGHT FH |  | 40 | 50 | 30 | 30 | 30 |
| JIS-A HARDNESS RT OF BEAD FILLER |  | 93 | 93 | 93 | 76 | 96 |
| G VALUE |  | 10.3 | 12.8 | 10.3 | 6.3 | 7.9 |
| ROLLOVER RESISTANCE | DOUBLE LANE CHANGE TEST | FAILURE | FAILURE | SUCCESS-FUL | MORE SUCCESS-FUL | MORE SUCCESS-FUL |
|  | TEST SPEED [km/h] | 60 | 60 | 60 | 62 | 62 |
| DRIVING STABILITY |  | 100 | 104 | 103 | 100 | 101 |

# FIG.23-2

|  |  | PRESENT INVENTION 21 | PRESENT INVENTION 22 | PRESENT INVENTION 23 | PRESENT INVENTION 24 |
|---|---|---|---|---|---|
| PROFILE |  | ROLLOVER-CHARACTER-ISTIC IMPROVED-FORM | ROLLOVER-CHARACTER-ISTIC IMPROVED-FORM | ROLLOVER-CHARACTER-ISTIC IMPROVED-FORM | ROLLOVER-CHARACTER-ISTIC IMPROVED-FORM |
| FILLER HEIGHT FH |  | 40 | 50 | 45 | 26 |
| JIS-A HARDNESS RT OF BEAD FILLER |  | 76 | 93 | 93 | 76 |
| G VALUE |  | 8.4 | 12.8 | 11.5 | 5.4 |
| ROLLOVER RESISTANCE | DOUBLE LANE CHANGE TEST | MORE SUCCESS-FUL | SUCCESSFUL | SUCCESSFUL | MORE SUCCESS-FUL |
|  | TEST SPEED [km/h] | 62 | 60 | 60 | 62 |
| DRIVING STABILITY |  | 102 | 105 | 104 | 96 |

# FIG.24

| | CONVEN-TIONAL EXAMPLE 8 | PRESENT INVEN-TION 25 | PRESENT INVEN-TION 26 | PRESENT INVEN-TION 27 | PRESENT INVEN-TION 28 | PRESENT INVEN-TION 29 |
|---|---|---|---|---|---|---|
| PROFILE | CONVEN-TIONAL FORM | ROLLOVER-CHARAC-TERISTIC IMPROVED-FORM | ASYM-METRICAL FORM | ASYM-METRICAL FORM | ASYM-METRICAL FORM | ASYM-METRICAL FORM |
| OD | 723 | 723 | 723 | 723 | 723 | 723 |
| SW | 228 | 228 | 228 | 228 | 228 | 228 |
| TDW | 176 | 164 | 164 | 168 | 164 | 168 |
| VEHICLE-OUTER-SIDE L1 | 44 | 52 | 52 | 57 | 52 | 57 |
| VEHICLE-OUTER-SIDE TR1 | 580 | 800 | 800 | 800 | 800 | 800 |
| VEHICLE-OUTER-SIDE SHR | 30 | 20 | 20 | 25 | 20 | 25 |
| VEHICLE-OUTER-SIDE K1 | 0.50 | 0.64 | 0.64 | 0.68 | 0.64 | 0.68 |
| VEHICLE-OUTER-SIDE K2 | 0.80 | 1.11 | 1.11 | 1.11 | 1.11 | 1.11 |
| VEHICLE-OUTER-SIDE K3 | 0.50 | 0.47 | 0.47 | 0.48 | 0.47 | 0.48 |
| VEHICLE-OUTER-SIDE K4 | 0.052 | 0.025 | 0.025 | 0.031 | 0.025 | 0.031 |
| VEHICLE-OUTER-SIDE α | 32 | 50 | 50 | 50 | 50 | 50 |
| VEHICLE-INNER-SIDE L1in | 44 | 52 | 41 | 46 | 38 | 48 |
| VEHICLE-INNER-SIDE TR1 | 580 | 800 | 580 | 580 | 580 | 580 |
| VEHICLE-INNER-SIDE K1in | 0.50 | 0.64 | 0.50 | 0.55 | 0.46 | 0.57 |
| VEHICLE-INNER-SIDE K2 | 0.80 | 1.11 | 0.80 | 0.80 | 0.80 | 0.80 |
| ROLLOVER RESISTANCE DOUBLE LANE CHANGE TEST | FAILURE | SUCCESSFUL | SUCCESSFUL | SUCCESSFUL | SUCCESSFUL | SUCCESSFUL |
| ROLLOVER RESISTANCE TEST SPEED [km/h] | 60 | 60 | 60 | 60 | 60 | 60 |
| WEAR RESISTANCE | 100 | 95 | 100 | 101 | 100 | 98 |
| DRIVING STABILITY | 100 | 103 | 101 | 103 | 97 | 102 |

# FIG.25

|  | CHARACTERISTICS OF EACH MATERIAL | CORD THICKNESS | ELONGATION RATE [%] UNDER TENSION OF 50 N | CORD DIAMETER | MAXIMUM END |
|---|---|---|---|---|---|
| (1) | 66 NYLON | 940T/2 | 9 | 0.55 | 90 |
| (2) | 66 NYLON | 940T/2 | 7.4 | 0.55 | 90 |
| (3) | PEN | 1100T/2 | 3.5 | 0.55 | 90 |
| (4) | POLYOLEFIN KETONE FIBER | 1100T/2 | 1.7 | 0.55 | 90 |
| (5) | ARAMID-NYLON HYBRID | 1100+940 | 2.8 | 0.55 | 90 |

## FIG.26-1

|  | CONVEN-TIONAL EXAMPLE 9 | PRESENT INVENTION 30 | PRESENT INVENTION 31 | PRESENT INVENTION 32 | PRESENT INVENTION 33 |
|---|---|---|---|---|---|
| PROFILE | CONVEN-TIONAL FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM |
| CENTRAL-REGION REINFORCING CORD | (1) | (1) | (1) | (1) | (1) |
| SHOULDER-REGION REINFORCING CORD | (1) | (1) | (1) | (1) | (2) |
| END COUNT IN CENTRAL REGION | 50 | 50 | 50 | 50 | 50 |
| END COUNT IN SHOULDER REGION | 50 | 50 | 60 | 70 | 50 |
| Ec | 5.56 | 5.56 | 5.56 | 90.91 | 5.56 |
| Es | 5.56 | 5.56 | 6.67 | 127.27 | 6.76 |
| Es/Ec | 1.00 | 1.00 | 1.20 | 1.40 | 1.22 |
| ROLLOVER RESISTANCE — DOUBLE LANE CHANGE TEST | FAILURE | SUCCESS-FUL | MORE SUCCESS-FUL | MORE SUCCESS-FUL | MORE SUCCESS-FUL |
| ROLLOVER RESISTANCE — TEST SPEED [km/h] | 60 | 60 | 62 | 62 | 62 |

## FIG.26-2

|  | PRESENT INVENTION 34 | PRESENT INVENTION 35 | PRESENT INVENTION 36 | PRESENT INVENTION 37 |
|---|---|---|---|---|
| PROFILE | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM | ROLLOVER-CHARAC-TERISTIC IMPROVED-FORM |
| CENTRAL-REGION REINFORCING CORD | (1) | (1) | (1) | (1) |
| SHOULDER-REGION REINFORCING CORD | (3) | (4) | (5) | (4) |
| END COUNT IN CENTRAL REGION | 50 | 50 | 50 | 50 |
| END COUNT IN SHOULDER REGION | 50 | 35 | 40 | 70 |
| Ec | 5.56 | 5.56 | 5.56 | 5.56 |
| Es | 14.29 | 20.59 | 14.29 | 41.18 |
| Es/Ec | 2.57 | 3.71 | 2.57 | 7.41 |
| ROLLOVER RESISTANCE — DOUBLE LANE CHANGE TEST | MORE SUCCESS-FUL | MORE SUCCESS-FUL | MORE SUCCESS-FUL | MORE SUCCESS-FUL |
| ROLLOVER RESISTANCE — TEST SPEED [km/h] | 62 | 62 | 62 | 62 |

# FIG.27

|  | K1 | K2 | K3 | K4 | α |
|---|---|---|---|---|---|
| CONVENTIONAL EXAMPLE 10 | 0.50 | 0.80 | 0.50 | 0.052 | 32 |
| PRESENT INVENTION 38 | 0.64 | 1.11 | 0.47 | 0.025 | 50 |
| PRESENT INVENTION 39 | 0.70 | 1.11 | 0.47 | 0.031 | 50 |
| PRESENT INVENTION 40 | 0.64 | 0.91 | 0.47 | 0.053 | 50 |
| PRESENT INVENTION 41 | 0.70 | 1.11 | 0.47 | 0.031 | 32 |
| COMPARATIVE EXAMPLE 4 | 0.55 | 1.11 | 0.48 | 0.031 | 50 |
| COMPARATIVE EXAMPLE 5 | 0.60 | 0.80 | 0.47 | 0.043 | 50 |
| COMPARATIVE EXAMPLE 6 | 0.64 | 1.11 | 0.50 | 0.031 | 50 |

# FIG.28

| | | PATTERN 1 | PATTERN 2 | PATTERN 3 | PATTERN 4 | PATTERN 5 |
|---|---|---|---|---|---|---|
| PRESENCE OF RECESS ON SHOULDER | | N/A | APPLICABLE | APPLICABLE | APPLICABLE | APPLICABLE |
| DEPTH OF RECESS [H/D, %] | | N/A | 10 | 20 | 50 | 60 |
| CONVEN-TIONAL EXAMPLE 10 | ROLLOVER RESISTANCE | FAILURE | FAILURE | FAILURE | FAILURE | FAILURE |
| | DRIVING STABILITY | 100 | 100 | 100 | 100 | 100 |
| | DURABILITY | 100 | 100 | 100 | 100 | 90 |
| | SHOULDER WEAR | 100 | 105 | 110 | 118 | 120 |
| PRESENT INVENTION 38 | ROLLOVER RESISTANCE | SUCCESS-FUL | MORE SUCCESS-FUL | MORE SUCCESS-FUL | MORE SUCCESS-FUL | MORE SUCCESS-FUL |
| | DRIVING STABILITY | 100 | 100 | 100 | 100 | 100 |
| | DURABILITY | 100 | 100 | 100 | 100 | 90 |
| | SHOULDER WEAR | 90 | 95 | 100 | 108 | 110 |
| PRESENT INVENTION 39 | ROLLOVER RESISTANCE | SUCCESS-FUL | MORE SUCCESS-FUL | MORE SUCCESS-FUL | MORE SUCCESS-FUL | MORE SUCCESS-FUL |
| | DRIVING STABILITY | 100 | 100 | 100 | 100 | 100 |
| | DURABILITY | 100 | 100 | 100 | 100 | 90 |
| | SHOULDER WEAR | 90 | 95 | 100 | 108 | 110 |
| PRESENT INVENTION 40 | ROLLOVER RESISTANCE | SUCCESS-FUL | SUCCESS-FUL | SUCCESS-FUL | SUCCESS-FUL | SUCCESS-FUL |
| | DRIVING STABILITY | 100 | 100 | 100 | 100 | 100 |
| | DURABILITY | 100 | 100 | 100 | 100 | 90 |
| | SHOULDER WEAR | 100 | 105 | 110 | 118 | 120 |
| PRESENT INVENTION 41 | ROLLOVER RESISTANCE | SUCCESS-FUL | SUCCESS-FUL | SUCCESS-FUL | SUCCESS-FUL | SUCCESS-FUL |
| | DRIVING STABILITY | 100 | 100 | 100 | 100 | 100 |
| | DURABILITY | 100 | 100 | 100 | 100 | 90 |
| | SHOULDER WEAR | 100 | 105 | 110 | 118 | 120 |
| COMPARA-TIVE EXAMPLE 4 | ROLLOVER RESISTANCE | FAILURE | FAILURE | FAILURE | FAILURE | FAILURE |
| | DRIVING STABILITY | 100 | 100 | 100 | 100 | 100 |
| | DURABILITY | 100 | 100 | 100 | 100 | 90 |
| | SHOULDER WEAR | 100 | 105 | 110 | 118 | 120 |
| COMPARA-TIVE EXAMPLE 5 | ROLLOVER RESISTANCE | FAILURE | FAILURE | FAILURE | FAILURE | FAILURE |
| | DRIVING STABILITY | 100 | 100 | 100 | 100 | 100 |
| | DURABILITY | 100 | 100 | 100 | 100 | 90 |
| | SHOULDER WEAR | 100 | 105 | 110 | 118 | 120 |
| COMPARA-TIVE EXAMPLE 6 | ROLLOVER RESISTANCE | FAILURE | FAILURE | FAILURE | FAILURE | FAILURE |
| | DRIVING STABILITY | 100 | 100 | 100 | 100 | 100 |
| | DURABILITY | 100 | 100 | 100 | 100 | 90 |
| | SHOULDER WEAR | 100 | 105 | 110 | 118 | 120 |

**REFERENCES CITED IN THE DESCRIPTION**

**Patent documents cited in the description**

- JP H971107 B
- JP 6297913 A